# FASCICULE DE BREVET EUROPEEN

(11) **EP 3 832 899 B1**
(45) Date de publication et mention de la délivrance du brevet: **03.09.2025**
(21) Numéro de dépôt: 20210791.8
(22) Date de dépôt: 30.11.2020
(51) Int. Cl.: H04B 7/06, H01Q 15/00, H01Q 3/46

(54) **ÉMETTEUR SANS FIL RÉALISANT UN MULTIPLEXAGE EN FRÉQUENCE DE CANAUX**
DRAHTLOSER SENDER, DER FREQUENZMULTIPLEXING VON KANÄLEN AUSFÜHRT
WIRELESS TRANSMITTER PERFORMING CHANNEL FREQUENCY MULTIPLEXING

(30) Priorité: 05.12.2019 FR 1913796
(43) Date de publication de la demande: 09.06.2021
(73) Titulaire: Commissariat à l'Energie Atomique et aux Energies Alternatives, 75015 Paris (FR)
(72) Inventeur: FOGLIA MANZILLO, Francesco, 38054 GRENOBLE cedex 09 (FR); CLEMENTE, Antonio, 38054 GRENOBLE cedex 09 (FR); GONZALEZ JIMENEZ, José-Luis, 38054 GRENOBLE cedex 09 (FR)
(74) Mandataire: INNOV-GROUP

(56) Documents cités:
- WO-A1-2014/158107
- PHAM KIEN T ET AL: "Dual-Band Transmitarrays With Dual-Linear Polarization at Ka-Band", IEEE TRANSACTIONS ON ANTENNAS AND PROPAGATION, IEEE SERVICE CENTER, PISCATAWAY, NJ, US, vol. 65, no. 12, 1 December 2017 (2017-12-01), pages 7009 - 7018, XP011673513, ISSN: 0018-926X, [retrieved on 20171128], DOI: 10.1109/TAP.2017.2762011
- HUM SEAN VICTOR ET AL: "Reconfigurable Reflectarrays and Array Lenses for Dynamic Antenna Beam Control: A Review", IEEE TRANSACTIONS ON ANTENNAS AND PROPAGATION, IEEE SERVICE CENTER, PISCATAWAY, NJ, US, vol. 62, no. 1, 1 January 2014 (2014-01-01), pages 183 - 198, XP011536500, ISSN: 0018-926X, [retrieved on 20131231], DOI: 10.1109/TAP.2013.2287296
- CANER GUCLU ET AL: "Proof of Concept of a Dual-Band Circularly-Polarized RF MEMS Beam-Switching Reflectarray", IEEE TRANSACTIONS ON ANTENNAS AND PROPAGATION, IEEE, USA, vol. 60, no. 11, 1 November 2012 (2012-11-01), pages 5451 - 5455, XP011471378, ISSN: 0018-926X, DOI: 10.1109/TAP.2012.2207690

## Description

L'invention concerne un émetteur sans fil réalisant un multiplexage en fréquence de canaux et un récepteur sans fil réalisant un démultiplexage en fréquence de canaux.

Un tel émetteur et un tel récepteur sont utilisés pour établir simultanément plusieurs canaux de communication. Chacun de ces canaux sert de support a une liaison de transmission de données. Les liaisons de transmission de données sont établies simultanément sur chacun des canaux et peuvent être indépendantes les unes des autres. Chaque canal correspond à une bande de fréquences réservée pour ce canal de communication. Cette bande de fréquences réservée est centrée sur une fréquence centrale fᵢ et délimitée de part et d'autre de la fréquence fᵢ par une limite inférieure fminᵢ et une limite supérieure fmaxᵢ. Ici, dans cette demande, l'indice i est un identifiant du canal qui permet de distinguer le canal i de tous les autres canaux utilisés par l'émetteur et le récepteur. Par la suite, la bande de fréquences réservée pour un canal i est appelée "bande de fréquences BWᵢ".

Les différentes bandes de fréquences BWᵢ utilisées par les émetteurs et récepteurs sont distinctes. En particulier, ces bandes de fréquences BWᵢ ne se chevauchent pas afin de garantir l'indépendance des canaux les uns par rapport aux autres.

De préférence, un tel émetteur doit présenter les avantages suivants :
- il est fortement directif et présente un gain élevé dans la direction d'émission ;
- il présente également une large-bande passante.

Par "gain élevé" dans la direction d'émission, on désigne ici un gain supérieur à 20 dBi et, de préférence supérieur à 25 dBi ou 30 dBi. Par "large-bande", on désigne dans cette demande une bande passante à -3 dB dont la largeur est supérieure à 15 % et, de préférence, supérieure à 20 %. Une largeur de bande supérieure à z % signifie que la largeur de la bande passante est supérieure à z x f_{c}/100, où :
- "x" est le symbole qui désigne la multiplication scalaire, et
- f_{c} est la fréquence centrale de cette bande passante à -3 dB.

De l'état de la technique est connu de l'article suivant : Pham Kien et Al : "Dual-Band Transmitarray With Dual-Linear Polarization at Ka-Band", IEEE Transactions on antennas and propagation, vol. 65, n°12, 01/12/2017, pages 7009-7018. Ce document décrit un réseau transmetteur particulier comportant un sous-réseau transmetteur pour l'émission d'onde électromagnétique et un autre sous-réseau pour la réception d'onde électromagnétique. Cet article ne décrit pas de multiplexage en fréquence de plusieurs canaux en émission ou de plusieurs canaux en réception. L'article suivant décrit des réseaux transmetteurs : Hum Sean Victor et Al : "Reconfigurable Reflectarrays and Array Lenses for Dynamic Antenna Beam Control : A Review", IEEE Transaction on antennas and propagation, vol. 62, n°1, 1/01/2014, pages 183-198.

L'invention vise à proposer un émetteur sans fil réalisant un multiplexage en fréquence de canaux et ayant une efficacité de rayonnement (" radiation efficiency " en anglais) améliorée. Elle a donc pour objet un tel émetteur conforme à la revendication 1.

L'invention a également pour objet un récepteur sans fil réalisant un démultiplexage en fréquence de canaux et apte à recevoir les ondes électromagnétiques émises par l'émetteur ci-dessus. Ce récepteur est conforme à la revendication 2.

L'invention sera mieux comprise à la lecture de la description qui va suivre, donnée uniquement à titre d'exemple non limitatif et faite en se référant aux dessins sur lesquels :
- la figure 1 est une illustration schématique d'un émetteur sans fil réalisant un multiplexage en fréquence de canaux ;
- la figure 2 est une illustration schématique, en coupe transversale, d'un détail de l'émetteur de la figure 1 ;
- la figure 3 est une illustration schématique d'un récepteur sans fil réalisant un démultiplexage en fréquence de canaux et apte à recevoir les ondes électromagnétiques émises par l'émetteur de la figure 1 ;
- la figure 4 est une illustration schématique, en vue de face, d'un autre mode de réalisation possible d'une antenne pour l'émetteur de la figure 1 ;
- les figures 5 et 6 sont des illustrations schématiques de deux autres modes de réalisation possibles d'un émetteur sans fil réalisant un multiplexage en fréquence de canaux.

Dans ces figures, les mêmes références sont utilisées pour désigner les mêmes éléments. Dans la suite de cette description, les caractéristiques et fonctions bien connues de l'homme du métier ne sont pas décrites en détail.

Dans cette description des exemples détaillés de modes de réalisation sont d'abord décrits dans le chapitre I en référence aux figures. Ensuite, dans le chapitre II suivant, des variantes de ces modes de réalisation sont présentées. Enfin, les avantages des différents modes de réalisation sont présentés dans un chapitre III.

### Chapitre I : Exemples de modes de réalisation :

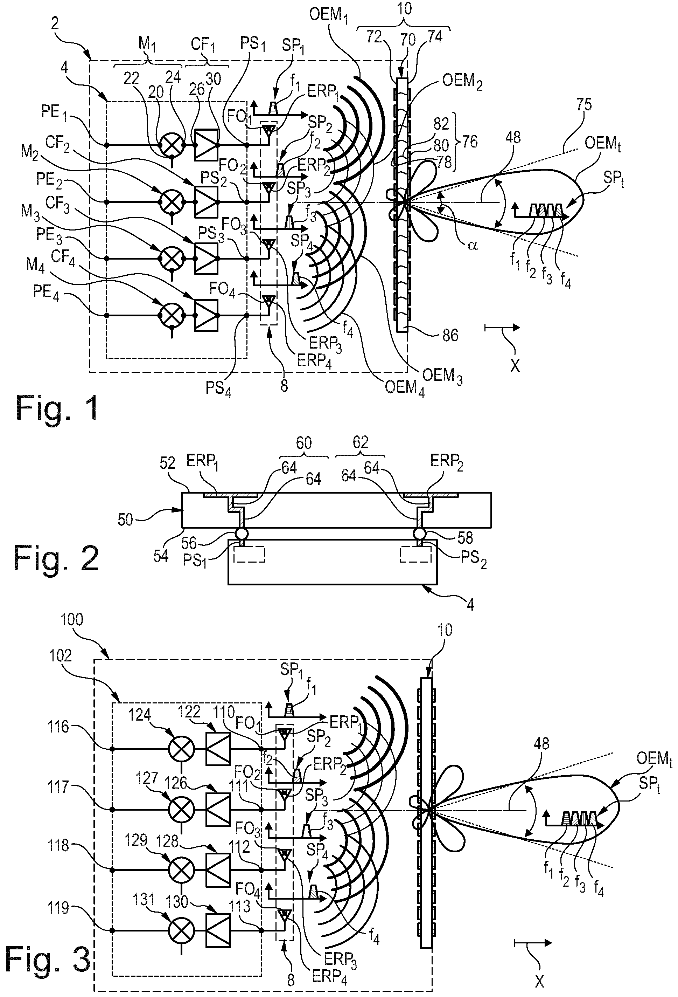

La figure 1 représente un émetteur 2 sans fil réalisant un multiplexage en fréquence de canaux. L'émetteur 2 est apte à établir simultanément plusieurs canaux de communication avec un récepteur. Chacun de ces canaux sert de support à une liaison de transmission de données entre l'émetteur 2 et ce récepteur. Ces liaisons de transmission données sont indépendantes les unes des autres. En particulier, les informations transmises sur un canal particulier peuvent être indépendantes des informations transmises, au même moment, sur d'autres canaux de l'émetteur 2.

Chaque canal i correspond à une bande de fréquences BWᵢ réservée pour ce canal i. Ici, l'indice i est un nombre entier compris entre 1 et Ncmax, où Ncmax est le nombre maximal de canaux utilisés par l'émetteur 2. Ici, les différentes bandes de fréquences BWᵢ sont contiguës les unes aux autres et s'étendent à l'intérieur d'une plage de fréquences [fmint; fmaxt], où fmint et fmaxt sont égaux, respectivement, à la plus petite des limites fminᵢ et à la plus grande des limites fmaxᵢ. De préférence, les différentes bandes de fréquences BWᵢ sont contiguës les unes aux autres à l'intérieur de la plage [fmint; fmaxₜ] de manière à exploiter au maximum cette plage de fréquences.

Par exemple, dans ce mode de réalisation, le nombre Ncmax est égal à quatre et l'indice i est donc compris entre 1 et 4. Ici, la plage [fmint; fmaxₜ] est située à l'intérieur de la bande de fréquences comprise entre 110 GHz et 170 GHz. Cette bande de fréquences est connue sous le terme de *« bande D ».* Il s'agit d'une bande de fréquences à l'intérieur de laquelle les ondes électromagnétiques sont millimétriques. Cette bande de fréquences est particulièrement intéressante car elle permet d'atteindre des débits de données supérieurs ou égaux à 10 Gbit/s sur des liaisons sans fil de courte distance.

L'émetteur 2 comporte notamment :
- un module 4 d'émission ;
- un ensemble 8 d'éléments rayonnants primaires, et
- un ensemble collimateur 10.

Le module 4 génère les signaux électriques modulés qui doivent être ensuite rayonnés dans l'espace par l'ensemble 8 d'éléments rayonnants primaires et l'ensemble collimateur 10. À cet effet, le module 4 comporte un port d'entrée PEᵢ pour chaque canal i. Le port PEᵢ reçoit les données, par exemple codées en binaire, qui doivent être transmises sur le canal i. Ici, le module 4 comporte quatre ports d'entrée PE₁ à PE₄. Les signaux reçus sur les ports PE₁ à PE₄ sont par exemple des signaux en bandes de base.

Le module 4 comporte aussi quatre ports de sortie PS₁ à PS₄ sur lesquels il génère, respectivement, quatre signaux électriques modulés appelés par la suite SEM₁ à SEM₄. Chaque signal SEMᵢ est apte à être rayonné par un élément rayonnant primaire respectif de l'ensemble8 puis par l'ensemble collimateur 10 dans une plage de fréquences BWᵢ respective comprise entre fminᵢ et fmaxᵢ.

Chaque port PEᵢ est raccordé au port PSᵢ correspondant par l'intermédiaire successivement d'un modulateur Mᵢ et d'un circuit CFᵢ de mise en forme. Dans cette description, sauf indication contraire, le terme « raccorder » signifie « raccorder électriquement ».

Le modulateur M₁ est apte à moduler, par exemple, une porteuse reçue sur une seconde entrée 22 en fonction des données reçues sur son entrée 20 afin de générer un signal électrique modulé initial. Ce signal électrique modulé initial est restitué sur une sortie 24 du modulateur M₁. Par exemple, dans ce mode de réalisation, l'essentiel de la puissance du signal électrique modulé initial est comprise à l'intérieur d'une bande de fréquences K₁ elle-même comprise à l'intérieur de la bande de fréquences K. Ici, la bande K₁ est située à l'intérieur de la bande de fréquences allant de 13,75 GHz à 21,25 GHz. Ensuite, le modulateur M₁ transpose le signal électrique modulé initial dans la bande K en un signal électrique correspondant modulé dans la bande D. Par exemple, la transposition de fréquences effectuée par le modulateur M₁ peut être est réalisé à l'aide de multiplieurs de fréquences comme décrit, par exemple, dans l'article suivant : F. Foglia Manzillo et al. : "Low-cost, High-Gain Antenna Module Integrating a CMOS Frequency Multiplier Driver for Communications at D-band", IEEE Radio Frequency Integrated Circuits Symposium, June 2019. Par la suite, cet article est simplement appelé "article A1".

Ici, le modulateur M₁ convertit donc le signal électrique initial en un signal électrique modulé de la même manière mais dans la bande de fréquences BW₁. Ici, par l'expression « *un signal modulé dans la bande de fréquences BW* », on désigne le fait que l'essentiel de la puissance de ce signal modulé est située à l'intérieur de cette bande de fréquences BW.

Par l'expression « l'essentiel de la puissance d'un signal est comprise à l'intérieur d'une bande B de fréquences », on désigne le fait qu'au moins 70 % et, de préférence, au moins 90 % ou 95 % de la puissance de ce signal est comprise dans cette bande de fréquences B. Autrement dit, la surface du spectre de puissance de ce signal comprise dans la bande B représente plus de 70 % et, de préférence, plus de 90 % ou 95 % de la surface totale de ce spectre de puissance.

La sortie 24 est raccordée à une entrée 26 d'un circuit CF₁ de mise en forme du signal électrique modulé dans la bande BW₁. Typiquement, le circuit CF₁ réalise l'amplification et le filtrage du signal modulé dans la bande BW₁ nécessaire à son émission dans l'air par un élément rayonnant primaire ERP₁. Le circuit CF₁ génère, sur une sortie 30, le signal électrique modulé SEM₁ à partir du signal électrique reçu sur son entrée 26.

Un spectre SP₁ de la puissance du signal SEM₁ est schématiquement représenté à proximité du circuit CF₁. Ce spectre SP₁ illustre le fait que l'essentiel de la puissance du signal SEM₁ est située à l'intérieur de la bande de fréquences BW₁. Dans les figures, la bande de fréquences BWᵢ d'un spectre de puissance est repérée par une flèche fᵢ.

La sortie 30 du circuit CF₁ est raccordée au port de sortie PS₁.

Les modulateurs M₂, M₃ et M₄ sont identiques au modulateur M₁ sauf que l'essentiel de la puissance du signal électrique modulé initial qu'il génère est comprise, respectivement, dans les bandes BW₂, BW₃ et BW₄ distinctes.

Les circuits CF₂ à CF₄ sont, par exemple, identiques au circuit CF₁ sauf qu'ils sont adaptés pour travailler, respectivement, dans les bandes BW₂, BW₃ et BW₄.

Les spectres de puissance SP₂ à SP₄ des signaux, respectivement, SEM₂ à SEM₄ sont représentés schématiquement à proximité, respectivement, des circuits CF₂ à CF₄ correspondants. Comme visibles sur les spectres SP₁ à SP₄, les signaux électriques modulés SEM₁ à SEM₄ sont modulés, respectivement, dans les bandes de fréquences BW₁ à BW₄ distinctes.

L'ensemble 8 d'éléments rayonnants primaires rayonne dans l'espace, vers l'ensemble collimateur 10, chacun des signaux SEM₁ à SEM₄. À cet effet, il comporte Ner éléments rayonnants primaires, où Ner est supérieur ou égal à Ncmax. Dans ce mode de réalisation, l'ensemble 8 comporte autant d'éléments rayonnants primaires que de canaux i et donc autant d'éléments rayonnants primaires que de ports de sortie PSᵢ. Sur les figures, les quatre éléments rayonnants primaires sont désignés par, respectivement, les références ERP₁ à ERP₄. Chaque élément rayonnant ERPᵢ est raccordé, ici directement, seulement au port de sortie PSᵢ correspondant du module 4. Réciproquement, chaque port PSᵢ est raccordé, dans ce mode de réalisation, seulement à l'élément rayonnant primaire correspondant ERPᵢ.

Ici, chaque élément rayonnant primaire ERPᵢ est apte à transformer le signal électrique SEMᵢ reçu en une onde électromagnétique OEMᵢ modulée de la même façon et dans la même bande de fréquences BWᵢ. De plus, chaque élément rayonnant ERPᵢ rayonne l'onde OEMᵢ en direction de l'ensemble collimateur 10.

Dans ce mode de réalisation, à titre d'illustration, les différents éléments rayonnants primaires ERPᵢ sont tous identiques. Ainsi, chaque élément rayonnant primaire ERPᵢ présente une bande passante à -3 dB qui débute avant la limite fmint et qui se termine au-delà de la limite fmaxt.

Typiquement, chaque élément rayonnant primaire ERPᵢ est configuré pour que la majorité de l'onde électromagnétique OEMᵢ émise soit reçue par l'ensemble collimateur 10. Par exemple, chacun des éléments rayonnants primaires ERPᵢ est agencé pour éclairer la totalité ou pratiquement la totalité d'une face intérieure 72 de l'ensemble collimateur 10.

Les fronts d'onde des ondes OEMᵢ sont, par exemple, sphériques et généralement non plans. De plus, les éléments rayonnants primaires ERPᵢ sont agencés pour que les ondes OEMᵢ émises présentent la même polarité.

Ici, pour faciliter l'intégration de l'ensemble 8 d'éléments rayonnants primaires avec un circuit intégré, l'ensemble 8 est un réseau planaire d'antennes, c'est-à-dire qu'il s'étend principalement dans un plan. Ici, ce plan est perpendiculaire à un axe 48 sur lequel est centrée l'ensemble collimateur 10.

À cet effet, l'ensemble 8 comporte une carte 50 (figure 2) de circuit imprimé et les éléments rayonnants primaires ERPᵢ sont réalisés sur une face avant 52 (figure 2) de cette carte 50. Typiquement, les éléments rayonnants primaires ERPᵢ sont gravés dans une couche de métallisation de la face avant 52.

Dans cet exemple de réalisation, l'ensemble 8 est une antenne à plaques, plus connue sous l'expression anglaise de « patch antenna ». Chaque élément rayonnant ERPᵢ correspond à l'une des plaques de cette antenne. Le plan de masse de cet ensemble 8 d'éléments rayonnants primaires est typiquement réalisé dans une couche de métallisation de la carte 50 enfouie entre la face 52 et une face arrière 54 (figure 2) située du côté opposé à la face avant 52.

Pour minimiser l'encombrement et faciliter la fabrication du module 4 et de l'ensemble 8 d'éléments rayonnants primaires, le module 4 se présente sous la forme d'un circuit intégré soudé sur la face arrière 54 de la carte 50. De plus, les liaisons électriques qui raccordent directement chaque port de sortie PSᵢ à l'élément rayonnant correspondant ERPᵢ sont, par exemple, réalisées à l'aide de via qui traversent l'épaisseur de la carte 50. À titre d'illustration, la figure 2 représente les ports de sortie PS₁ et PS₂ soudés sur la face arrière 54 de la carte 50 par l'intermédiaire de billes de soudure, respectivement, 56 et 58. La figure 2 représente également deux liaisons électriques 60 et 62 qui raccordent directement les ports de sortie PS₁ et PS₂, respectivement, aux éléments rayonnants ERP₁ et ERP₂. Les liaisons 60 et 62 sont réalisées à l'aide de via 64 qui traversent une partie ou la totalité de l'épaisseur de la carte 50.

L'ensemble collimateur 10 est apte à re-rayonner les différentes ondes électromagnétiques reçues dans une direction commune de propagation représentée par une flèche X dans les figures. Cela permet d'atteindre des gains élevés dans ladite direction. Dans ce premier mode de réalisation, la direction X est parallèle à l'axe 48. Dans ce mode de réalisation, l'émetteur 2 est un émetteur directif, c'est-à-dire que la puissance de l'onde électromagnétique large-bande OEMₜ émise par l'émetteur 2 se situe essentiellement à l'intérieur d'un cône 75 d'illumination. Ici, un cône d'illumination est défini comme étant le cône tel que la puissance de l'onde électromagnétique à l'extérieur de ce cône est deux fois plus petite que le maximum de puissance de l'onde électromagnétique à l'intérieur de ce cône. Ce cône 75 est ici un cône de révolution dont l'axe de révolution est confondu dans ce mode de réalisation avec l'axe 48. L'angle α au sommet du cône 75 est inférieur à 45° et, de préférence inférieur à 25° ou 10° ou 5°. L'angle α est est également connu sous le terme "angle d'ouverture à - 3 dB". Ainsi, un récepteur situé en dehors de ce cône 75 ne peut pas ou très difficilement, recevoir l'onde électromagnétique OEMₜ.

L'onde OEMₜ présente un front d'onde plan ou pratiquement plan rayonné à partir d'une face extérieure 74 de l'ensemble collimateur 10. Ce front d'onde est perpendiculaire à la direction X.

Ici, pour chaque bande de fréquences BWᵢ, l'ensemble collimateur 10 comporte un foyer FOᵢ. Dans cette demande, le terme "foyer" désigne le centre de phase du rayonnement électromagnétique. Le foyer FOᵢ présente la propriété suivante : lorsqu'une onde électromagnétique est rayonnée à partir de ce foyer FOᵢ dans la bande de fréquences BWᵢ, alors cette onde électromagnétique est transformée par l'ensemble collimateur 10 en une onde électromagnétique plane dirigée dans la direction X. Cette propriété est vraie uniquement pour l'onde électromagnétique dans la bande de fréquences BWᵢ qui est rayonnée à partir du foyer FOᵢ. Ainsi, cette propriété est fausse notamment pour une onde électromagnétique rayonnée à partir du foyer FOᵢ mais dans une bande de fréquences différente de la bande de fréquences BWᵢ ou pour une onde électromagnétique dans la bande de fréquences BWᵢ mais rayonnée depuis un autre point que le foyer FOᵢ.

Ainsi, le foyer FOᵢ est le point vers lequel l'ensemble collimateur 10 dirige ou focalise les ondes électromagnétiques planes reçues sur sa face extérieure 74 le long de la direction X quand ces ondes électromagnétiques planes sont dans la bande de fréquences BWᵢ. À l'inverse, ici, l'ensemble collimateur 10 transforme toute onde électromagnétique sphérique émise depuis le foyer FOᵢ en une onde électromagnétique plane rayonnée dans la direction X lorsque cette onde électromagnétique sphérique est dans la bande de fréquences BWᵢ. Ici, par "onde électromagnétique sphérique", on désigne une onde électromagnétique dont le front d'onde est sphérique. Lorsqu'une telle onde électromagnétique sphérique est émise à partir du foyer FOᵢ, le centre du front d'onde sphérique est situé sur ce foyer FOᵢ.

De préférence, l'ensemble collimateur 10 est un ensemble collimateur à réseau transmetteur, c'est-à-dire un ensemble collimateur réalisé à l'aide d'une ou plusieurs antennes à réseau transmetteur. Une antenne à réseau transmetteur est plus connue sous le terme anglais de « transmit-array antenna ». Ces antennes sont bien connues dans le domaine du filtrage spatial ou du "beamforming" en anglais.

Dans ce premier mode de réalisation, l'ensemble collimateur 10 comporte une seule antenne secondaire 70 à réseau transmetteur. L'antenne 70 comporte de nombreuses cellules élémentaires de différents types. Chaque cellule élémentaire comprend principalement :
- un élément rayonnant intérieur disposé sur la face 72 ;
- un élément rayonnant extérieur disposé sur la face 74, et
- une liaison de transfert d'énergie reçue par l'un de ces éléments rayonnants vers l'autre.

À titre d'illustration, un exemple de cellules élémentaires 76 est représenté sur la figure 1. La réalisation de cellules élémentaires est bien connue. Par exemple, une description détaillée de cellules élémentaires susceptibles d'être utilisées pour réaliser l'antenne 70 est donnée dans les articles suivants :
- A. Abbaspour-Tamijani, K. Sarabandi, and G. M. Rebeiz, "Antenna-filter-antenna arrays as a class of bandpass frequency-selective surfaces," IEEE Trans. Microw. Theory Techn., vol. 52, no. 8, pp. 1781-1789, Aug. 2004.
- M. Li, M. A. Al-Joumayly, and N. Behdad, "Broadband true-time-delay microwave lenses based on miniaturized element frequency selective surfaces," IEEE Trans. Antennas Propag., vol. 61, no. 3, pp. 1166-1179, Mar. 2013
- Y. He and G. V. Eleftheriades, "Matched, Low-Loss, and Wideband Graded-Index Flat Lenses for Millimeter-Wave Applications," IEEE Trans. Antennas Propag., vol. 66, no. 3, pp. 1114-1123, Mar. 2018.
- A. Clemente, L. Di Palma, F. Diaby, L. Dussopt, T. K. Pham, and R. Sauleau, "Electronically-steerable transmitarray antennas for Kaband," Proc. 13th Eur. Conf. Antennas Propag., Krakow, Poland, Apr. 2019.
Par conséquent, ici, une description détaillée des cellules élémentaires n'est pas donnée.

La cellule élémentaire 76 comporte un élément rayonnant intérieur 78, un élément rayonnant extérieur 80 et une liaison 82 de transfert d'énergie. La liaison 82 permet de transférer l'énergie reçue par l'élément rayonnant 78 vers l'élément rayonnant 80. La liaison 82 est également agencée pour introduire un déphasage prédéterminé lors de ce transfert d'énergie entre les éléments rayonnants 78 et 80. De plus, la cellule élémentaire 76 comporte, par exemple, un plan de masse qui sépare les éléments rayonnants 78 et 80.

Dans ce mode de réalisation, l'élément rayonnant 80 émet une onde électromagnétique identique, et de même polarité, que l'onde électromagnétique reçue par l'élément 78 mais avec un retard prédéterminé. Ce retard prédéterminé introduit donc un déphasage prédéterminé entre l'onde électromagnétique reçue par l'élément 78 et l'onde électromagnétique rayonnée par l'élément 80.

Dans ce mode de réalisation, les cellules élémentaires utilisées sont des cellules élémentaires appelées ici « cellules élémentaires multibandes ». Une cellule élémentaire multibandes est une cellule élémentaire conformée pour présenter une bande passante à -3 dB qui englobe plusieurs des bandes de fréquences BWᵢ. Dans ce mode de réalisation particulier, ces cellules élémentaires multibandes englobent l'ensemble des bandes de fréquences BWᵢ, c'est-à-dire la bande [fmint, fmaxt].

De plus, le retard ou déphasage prédéterminé introduit par la cellule élémentaire multibande varie en fonction de la bande de fréquences BWᵢ dans laquelle se situe l'onde électromagnétique reçue. Par exemple, ici, pour chaque bande de fréquences BWᵢ, le déphasage introduit est différent de celui introduit dans les autres bandes de fréquences BWᵢ. A cause de cette propriété, une même disposition des cellules 76 les unes par rapport aux autres permet d'obtenir les différents foyers FOᵢ de l'antenne 70 disposés dans l'espace à différents emplacements. Un agencement particulier de cellules élémentaires qui permet de transformer l'onde OEMᵢ en une onde électromagnétique plane dirigée dans la direction X lorsque l'onde OEMᵢ est rayonnée à partir du foyer FOᵢ, forme l'équivalent d'une lentille discrète. Dans ce mode de réalisation, il existe quatre foyers FOᵢ différents, l'antenne 70 forme donc l'équivalent de quatre lentilles discrètes différentes, une pour chaque bande de fréquences BWᵢ.

Les cellules élémentaires multibandes permettent de former l'équivalent de ces quatre lentilles discrètes en utilisant les mêmes cellules élémentaires. Ainsi, la même cellule élémentaire 76 est utilisée pour diriger, dans la direction X, en combinaison avec les autres cellules élémentaires de l'antenne 70, les ondes électromagnétiques émises à partir des différents foyers FOᵢ de l'antenne 70. Dans ce mode de réalisation, les cellules 76 sont toutes placées dans un seul secteur de l'antenne 70, cet unique secteur occupant la totalité d'une face de l'antenne 70.

Toutes les cellules élémentaires du même type introduisent le même retard prédéterminé dans la même bande de fréquences BWᵢ et cela pour toutes les valeurs possibles de l'indice i. Les cellules élémentaires du même type introduisent donc les mêmes déphasages dans les mêmes bandes de fréquences BWᵢ. De préférence, pour simplifier la conception de l'antenne 70, les cellules élémentaires 76 sont également configurées pour que l'écart entre les déphasages de deux quelconque des types de cellules élémentaires soit le même dans toutes les bandes BWᵢ.

L'antenne 70 comporte Nce types différents de cellules élémentaires, où Nce est supérieur ou égal à deux et, de préférence, supérieur ou égal à quatre, huit ou douze. De plus, les Nce types différents de cellules élémentaires sont configurés pour correspondre à Nce déphasages différents répartis sur 360°. Ensuite, connaissant le déphasage introduit par chaque type de cellules élémentaires dans les différents bandes BWᵢ, ces cellules élémentaires de différents types sont disposées les unes par rapport aux autres de manière à former l'équivalent des quatre lentilles discrètes souhaitées. La conception et la fabrication de l'antenne 70, telle que spécifiée ici, est une tache courante que l'homme du métier sait mener à bien. En particulier, différentes méthodes sont connues pour obtenir l'agencement approprié des cellules élémentaires de l'antenne 70. Ces méthodes font souvent appel à des logiciels qui permettent de simuler le rayonnement d'une antenne à réseau transmetteur en fonction des caractéristiques de chaque cellule élémentaire et de leur position les unes par rapport aux autres ainsi qu'en tenant compte de la fréquence de l'onde électromagnétique rayonnée. En particulier, les techniques de synthèse multi-fréquentielle de réseau peuvent être appliquées. Par exemple, l'agencement des différents types de cellules élémentaires les unes par rapport aux autres peut être obtenu à partir d'une méthode similaire à celle décrite dans les articles suivant :
- Y. Mao, S. Xu, F. Yang, and A. Z. Elsherbeni, "A novel phase synthesis approach for wideband reflectarray design", IEEE Trans. Antennas Propag., vol. 63, no. 9, Sept. 2015.
- R. Deng, S. Xu and F. Yang, M. Li, "Single-Layer Dual-Band Reflectarray Antennas With Wide Frequency Ratios and High Aperture Efficiencies Using Phoenix Elements", IEEE Trans. Antennas Propag., vol. 65, no. 2, pp. 612-622, Feb. 2017.
- M. Borgese, F. Costa, S. Genovesi, and A. Monorchio, "An Iterative Design Procedure for Multiband Single-Layer Reflectarrays: Design and Experimental Validation", IEEE Trans. Antennas Propag., vol. 65, no. 9, Sept. 2016.
- P. Feng, S. Qu and S. Yang, "Octave Bandwidth Transmitarrays With a Flat Gain", IEEE Trans. Antennas Propag., vol. 66, no. 10, pp. 5231-5238, Oct. 2018.
Ainsi, la structure de chaque cellule élémentaire de l'antenne 70 ainsi que leur agencement les unes par rapport aux autres ne sont pas décrits plus en détail.

Ici, chaque élément rayonnant primaire ERPᵢ est centré sur le foyer FOᵢ qui correspond à la même bande de fréquences BWᵢ.

Pour faciliter la fabrication de l'antenne 70 et limiter son encombrement, l'antenne 70 est une antenne planaire fabriquée à partir d'une carte 86 de circuit imprimé. Par exemple, les éléments rayonnants intérieur et extérieur sont réalisés dans des couches de métallisation situées, respectivement, sur les faces 72 et 74. Le plan de masse qui sépare mutuellement l'élément rayonnant intérieur d'une cellule élémentaire de son élément rayonnant extérieur est alors réalisé dans une couche de métallisation enfouie située entre les faces 72 et 74.

Le fonctionnement de l'émetteur 2 est le suivant. Les données à transmettre simultanément sur les différents canaux i sont reçues sur les ports PE₁ à PE₄. Ensuite, ces données sont modulées par les différents modulateurs Mᵢ afin d'obtenir les différents signaux électriques modulés. Les différents signaux électriques modulés sont alors mis en forme par les circuits CF₁ à CF₄ afin d'obtenir les différents signaux électriques SEM₁ à SEM₄. Chacun de ces signaux électriques SEM₁ à SEM₄ est rayonné par un élément rayonnant primaire ERPᵢ respectif afin d'obtenir les quatre ondes électromagnétiques OEM₁ à OEM₄ modulées dans chacune des bandes de fréquences BW₁ à BW₄. Ces ondes électromagnétiques OEM₁ à OEM₄ sont reçues par les éléments rayonnants intérieurs de l'antenne 70. L'antenne 70 transforme alors l'ensemble des ondes électromagnétiques OEM₁ à OEM₄, ayant différents directions d'incidence, en une onde électromagnétique plane rayonnée dans la direction commune X. La superposition de ces ondes électromagnétiques planes rayonnée dans la direction X forme l'onde OEMₜ.

La figure 1 représente schématiquement un spectre SPt de l'onde OEMₜ. Ce spectre SPt montre que l'onde OEMₜ rayonnée combine les puissances des différentes ondes OEM₁ à OEM₄ émises par l'ensemble 8. Par conséquent, l'onde OEMₜ est une onde électromagnétique large-bande, dont l'essentiel de l'énergie est compris entre les limites fmint et fmaxt. De plus, l'onde OEMₜ est une onde électromagnétique plane dirigée dans la direction X, ce qui permet d'obtenir un gain important.

Dans ce mode de réalisation, la combinaison de la puissance des différents signaux électriques SEM₁ à SEM₄ générés sur les différents ports PS₁ à PS₄ se produit dans l'air et en particulier, pour une partie, entre l'ensemble 8 et l'antenne 70 et, pour la majeure partie, après la face extérieure 74. Cette combinaison de puissance dans l'air se produit car les différentes ondes électromagnétiques rayonnées par l'ensemble 8 sont de même polarité et grâce à l'agencement des différents types de cellule élémentaires 76 qui redirige toutes les ondes OEMᵢ dans la même direction X. Ce multiplexage de puissance dans l'air est aussi appelé multiplexage de puissance « over-the-air ». Ainsi, dans l'émetteur 2, il n'est pas nécessaire d'utiliser un circuit électrique de multiplexage de puissance pour faire cela. Un tel circuit électrique de multiplexage de puissance est connu sous le terme anglais de « power combiner ». Un circuit électrique de multiplexage de puissance réalise le même travail qu'un multiplexage de puissance dans l'air mais en introduisant plus de pertes, notamment dans la gamme des fréquences supérieures à 1 GHz. Par exemple, dans le domaine des fréquences millimétriques, un tel circuit électrique de multiplexage de puissance introduit des pertes d'insertion d'environ 3 dB. En mettant en œuvre un multiplexage de puissance dans l'air, ces pertes sont évitées et l'efficacité de rayonnement de l'émetteur 2 est donc accrue.

De plus, un circuit électrique de multiplexage de puissance est souvent associé à un diviseur de puissance ou « power splitter » en anglais. Ce diviseur de puissance est nécessaire pour alimenter les éléments rayonnants et introduit lui aussi des pertes d'insertion, que croissent avec le nombre d'éléments rayonnants primaires. Ainsi, la mise en œuvre du multiplexage de puissance dans l'air permet aussi d'éviter ces pertes liées à l'utilisation d'un diviseur de puissance.

La figure 3 représente un récepteur 100 apte à recevoir l'onde OEMₜ émise par l'émetteur 2. Le récepteur 100 est identique à l'émetteur 2 sauf que le module d'émission 4 est remplacé par un module 102 de réception. Le module 102 est apte, à partir des signaux électriques modulés reçus par les éléments rayonnants primaires ERP₁ à ERP₄ à restituer, sur ses ports de sortie, les données modulées. À cet effet, le module 102 comporte :
- quatre ports d'entrée 110 à 113 raccordés, respectivement, directement aux éléments rayonnants ERP₁ à ERP₄, et
- quatre ports de sortie 116 à 119 sur lesquels sont restitués les données reçues sur les canaux 1 à 4.

Entre le port d'entrée 110 et le port de sortie 116, le module 102 comporte successivement un circuit 122 de mise en forme et un démodulateur 124.

Le circuit 122 et le démodulateur 124 réalise les opérations inverses de celles réalisées par, respectivement, le circuit CF₁ et le modulateur M₁. Par conséquent, ce circuit 122 et ce démodulateur 124 ne sont pas décrits ici plus en détail. De façon similaire :
- entre le port d'entrée 111 et le port de sortie 117, le module 102 comporte un circuit de mise en forme 126 et un démodulateur 127 qui réalisent les opérations inverses de celles réalisées par, respectivement, le circuit CF₂ et le modulateur M₂,
- entre le port d'entrée 112 et le port de sortie 118, le module 102 comporte un circuit de mise en forme 128 et un démodulateur 129 qui réalisent les opérations inverses de celles réalisées par, respectivement, le circuit CF₃ et le modulateur M₃, et
- entre le port d'entrée 113 et le port de sortie 119, le module 102 comporte un circuit de mise en forme 130 et un démodulateur 131 qui réalisent les opérations inverses de celles réalisées par, respectivement, le circuit CF₄ et le modulateur M₄.

Le récepteur 100 réalise les opérations inverses de celles décrites dans le cas de l'émetteur 2. En particulier, il est souligné que le fonctionnement de l'ensemble 8 et de l'ensemble collimateur 10 en réception est le même que celui en émission sauf que les ondes électromagnétiques se propagent en sens inverse. Le fonctionnement du récepteur 100 se déduit donc des explications données sur le fonctionnement de l'émetteur 2. En particulier, dans le récepteur 100, l'antenne 70 focalise l'onde électromagnétique OEMₜ reçue sur les différents foyers FOᵢ et, en même temps, sépare les différentes bandes BW₁ à BW₄ les unes des autres. Ainsi, l'antenne 70 réalise un démultiplexage de puissance dans l'air. Les avantages soulignés du côté émetteur lié au multiplexage de puissance dans l'air se retrouvent donc à l'identique du côté du récepteur mais dans le cadre d'un démultiplexage de puissance dans l'air.

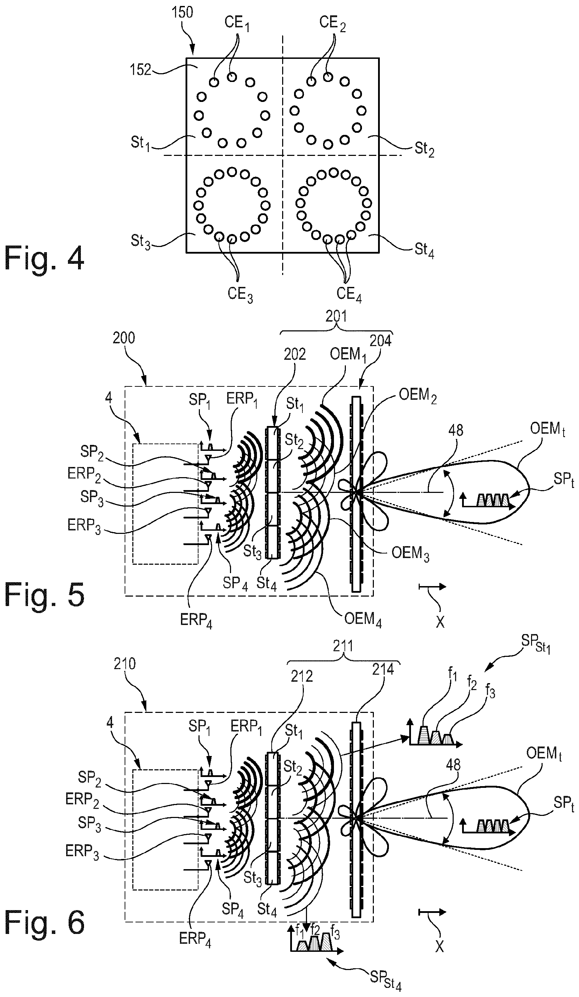

La figure 4 représente la face avant 152 d'une antenne secondaire 150 susceptible d'être utilisée à la place de l'antenne 70 de l'émetteur 2. L'antenne 150 est identique à l'antenne 70 sauf qu'elle est réalisée en utilisant uniquement des cellules élémentaires monobandes CEᵢ. Une cellule élémentaire "monobande" est une cellule élémentaire qui est seulement utilisée pour former une lentille discrète parmi les quatre souhaitées. Une cellule élémentaire monobande CEᵢ est donc uniquement utilisée pour focaliser une onde électromagnétique plane reçue le long de la direction X dans la bande de fréquences BWᵢ vers le foyer FOᵢ. En sens inverse, cette cellule élémentaire CEᵢ monobande est uniquement utilisée pour transformer une onde électromagnétique sphérique rayonnée dans la bande de fréquences BWᵢ à partir du foyer FOᵢ en une onde électromagnétique plane rayonnée dans la direction X. Cette cellule élémentaire CEᵢ monobande n'est pas utilisée pour faire le même travail dans les autres bandes de fréquences BWᵢ. Dans ces conditions, les structures et la disposition les unes par rapport aux autres des cellules CEᵢ sont réalisées pour fonctionner uniquement dans la seule bande de fréquences BWᵢ. Ceci permet de relâcher les contraintes de fabrication de ces cellules CEᵢ. En particulier, la bande passante à -3 dB de chaque cellule CEᵢ englobe au moins entièrement la bande de fréquences BWᵢ. Par contre, elle n'a pas besoin d'englober entièrement d'autres bandes de fréquences BWᵢ. Ici, la bande passante à -3 dB de chaque cellule CEᵢ englobe entièrement uniquement la bande de fréquences BWᵢ.

La disposition des cellules CEᵢ les unes par rapport aux autres est uniquement réalisé pour transformer une onde électromagnétique sphérique émise dans la bande de fréquences BWᵢ à partir du foyer FOᵢ en une onde électromagnétique plane rayonnée dans la direction X. En particulier, comme décrit précédemment, il existe différents types de cellules élémentaires CEᵢ. Par contre, la disposition des cellules élémentaires CEᵢ est conçu indépendamment de la disposition des autres cellules élémentaires de l'antenne 150 utilisées pour travailler dans les autres bandes de fréquences BWᵢ. Pour cela, par exemple, la face avant 152 est divisée en quatre secteurs convexes St₁ à St₄ qui ne se chevauchent pas. Un secteur convexe est une zone de la face avant 152 dont l'enveloppe est convexe. Chaque secteur Stᵢ contient uniquement des cellules élémentaires CEᵢ. A l'intérieur de chaque secteur Stᵢ, les différents types de cellules élémentaires CEᵢ sont disposées les unes par rapport aux autres pour former la lentille discrète de foyer FOᵢ.

L'antenne 150 est plus simple à concevoir. Par contre, son efficacité de rayonnement est moindre à encombrement égal à celui de l'antenne 70.

La figure 5 représente un émetteur 200 identique à l'émetteur 2, sauf que l'ensemble collimateur 10 est remplacée par un ensemble collimateur 201. L'ensemble collimateur 201 comporte une antenne intermédiaire 202 et une antenne secondaire 204 disposées l'une après l'autre dans la direction X. L'antenne 202 est située entre l'ensemble 8 et l'antenne 204. Les antennes 202 et 204 sont des antennes à réseau transmetteur, chacune centrée sur l'axe 48.

Ici, l'antenne 202 est, par exemple, identique à l'antenne 150 sauf que la disposition des cellules élémentaires CE₁ à CE₄ dans chacun des secteurs St₁ à St₄ est différentes. Comme précédemment, les cellules élémentaires dans chaque secteur Stᵢ sont agencées pour réaliser une mise en forme particulière de l'onde électromagnétique OEMᵢ. Ici, cette mise en forme réalisée par les cellules CEᵢ vise à répartir plus uniformément la puissance de l'onde OEMᵢ sur la face intérieure de l'antenne 204. A cet effet, par exemple, les cellules CEᵢ de chaque secteur Stᵢ sont agencées pour que l'essentiel de la puissance de l'onde électromagnétique OEMᵢ qu'elles rayonnent soit située à l'intérieur d'un cône d'illumination qui contient entièrement la face intérieure de l'antenne 204. Ici, la périphérie de ce cône d'illumination est adjacente avec la périphérie de l'antenne 204. De plus, les cellules CEᵢ sont agencées de manière à ce que la puissance de l'onde électromagnétique OEMᵢ rayonnée à l'intérieur de ce cône d'illumination soit aussi uniforme que possible dans chaque section transversale de ce cône d'illumination. Par la suite, le sommet du cône d'illumination des cellules CEᵢ du secteur Stᵢ est noté SCᵢ.

L'antenne 204 est, par exemple, identique à l'antenne 70 sauf que la disposition des cellules élémentaires 76 est réalisée pour que ses foyers FO_{1,204} à FO_{4,204} soient situés sur les sommets, respectivement, SC₁ à SC₄ des cônes d'illumination des secteurs St₁ à St₄ de l'antenne 202. Le symbole FO_{i,204} désigne le foyer de l'antenne 204 pour la bande de fréquences BWᵢ.

Ce mode de réalisation permet d'augmenter le rendement d'ouverture ("aperture efficiency" en anglais) de l'émetteur.

La figure 6 représente un émetteur 210 identique à l'émetteur 200, sauf que l'ensemble collimateur 201 est remplacé par un ensemble collimateur 211. L'ensemble collimateur 211 comporte une antenne intermédiaire 212 et une antenne secondaire 214. Les antennes 212 et 214 sont des antennes à réseau transmetteur centrées sur l'axe 48.

Dans ce mode de réalisation, l'antenne 212 est identique à l'antenne 202 sauf que, dans chacun des secteurs Stᵢ, les cellules élémentaires CEᵢ sont remplacées par des cellules élémentaires multibandes 76. Les cellules 76 d'un même secteur Stᵢ sont agencées les unes par rapport aux autres pour transformer les ondes électromagnétiques émises à partir d'un nombre limité d'éléments rayonnants primaires ERPᵢ en une onde électromagnétique plane émise dans une direction commune. Par exemple, le secteur St₁ est le plus proche de l'élément rayonnant ERP₁. De plus, le secteur St₁ est plus proche des éléments rayonnants ERP₂ et ERP₃ que de l'élément rayonnant ERP₄. Dans ces conditions, les cellules 76 du secteur St₁ sont agencées les unes par rapport aux autres pour transformer, respectivement, les ondes électromagnétiques OEM₁, OEM₂ et OEM₃ reçues, en ondes électromagnétiques planes correspondantes qui se propagent toutes dans la même direction, par exemple, parallèle à la direction X ou dirigée vers le centre de l'antenne 214. Ainsi, les cellules 76 du secteur St₁ permette de réaliser un premier multiplexage de puissance dans l'air des ondes OEM₁, OEM₂ et OEM₃. Typiquement, l'onde électromagnétique rayonnée par le secteur St₁ présente une puissance plus élevée dans la bande BW₁ que dans les bandes BW₂ et BW₃ car l'élément ERP₁ et plus proche du secteur St₁ que les éléments ERP₂ et ERP₃. C'est ce qui est illustré sur la figure 6 par le spectre SP_{St1}

Les cellules 76 dans les autres secteurs Stᵢ de l'antenne 212 sont agencées de façon similaire mais pour traiter d'autres triplets de bandes de fréquences BWᵢ. L'essentiel de la puissance de l'onde électromagnétique rayonnée par les cellules 76 d'un secteur Stᵢ est situé à l'intérieur d'un cône d'illumination de sommet SCᵢ. Ce qui est expliqué ci-dessus dans le cas particulier du secteur St₁ s'applique aussi aux autres secteurs Stᵢ. Par exemple, le spectre SP_{St4} du secteur St₄ est représenté sur la figure 6 à titre d'illustration.

L'antenne 214 est identique à l'antenne 70 sauf que ses cellules élémentaires 76 sont disposées les unes par rapport aux autres de manière à ce que chacun de ses foyers FO_{1,214} à FO_{4,214} soit situé sur un sommet respectifs SCᵢ. Le symbole FO_{i,214} désigne le foyer de l'antenne 204 pour la bande de fréquences BWᵢ. Dans ces conditions, un second multiplexage de puissance dans l'air de ces ondes OEM₁ à OEM₄ intervient après la face extérieure de l'antenne 214.

### Chapitre II : Variantes :

Par la suite, les différentes variantes sont décrites dans le cas particulier d'un émetteur. Toutefois, toute variante décrite dans le cas d'un émetteur peut facilement être adaptée par l'homme du métier au cas d'un récepteur sans fil réalisant un démultiplexage en fréquence de canaux, tel que celui décrit en regard de la figure 3.

### Variantes du module d'émission :

Les largeurs des différentes bandes BWᵢ peuvent être différentes les unes des autres.

Les différentes bandes BWᵢ ne sont pas nécessairement contiguës les unes aux autres. Par exemple, la bande BW₁ peut être séparée de la bande BW₂ par une plage de fréquences non utilisées.

Le module 4 d'émission peut être composé de plusieurs circuits intégrés mécaniquement indépendants, comportant chacun un seul port d'entrée PEᵢ et un seul port de sortie PSᵢ. Chacun de ces circuits intégrés génère un signal électrique correspondant SEMᵢ. Dans ce cas, chacun de ces circuits intégrés est soudé sur la face arrière de la carte 50 et directement raccordé par une liaison filaire à l'élément rayonnant primaire ERPᵢ correspondant.

Le module 4 peut se présenter sous d'autres formes que celle d'un circuit intégré soudable sur la carte 50. Par exemple, le module 4 peut aussi être une carte électronique indépendante de la carte 50 est raccordée à la carte 50 par l'intermédiaire de liaisons filaires ou de soudures.

Dans un autre mode de réalisation, chaque port PSᵢ est raccordé à l'élément primaire PSᵢ, non pas par une liaison filaire, mais par l'intermédiaire d'un couplage électromagnétique. Ce couplage électromagnétique remplit, fonctionnellement, le même rôle que la liaison filaire. Par exemple, il est réalisé à l'aide de fentes de couplage.

### Variantes de l'ensemble d'éléments rayonnants primaires :

En variantes, plusieurs éléments rayonnants primaires sont raccordés au même port de sortie PSᵢ du module 4 d'émission. Dans ce cas, il y a plus d'éléments rayonnants primaires que de ports de sortie. Un diviseur de puissance est introduit entre ce port PSᵢ et les différents éléments rayonnants primaires raccordés à celui-ci. Par contre, même dans ce cas, aucun des éléments rayonnants primaires n'est raccordé à plusieurs ports de sortie différents du module d'émission. Ainsi, même dans ce cas, l'utilisation d'un circuit électrique de multiplexage de puissance est évitée.

Dans le cas où plusieurs éléments rayonnants primaires sont raccordés au même port PSᵢ, l'agencement de ces différents éléments rayonnants primaires forme une source de rayonnement électromagnétique présentant un centre de phase équivalent à partir duquel est rayonné ce rayonnement électromagnétique. Ce centre de phase équivalent ou foyer équivalent n'est pas, en général, centré sur l'un de ses éléments rayonnants primaires. Par exemple, il peut se trouver dans un plan situé derrière le plan contenant les différents éléments rayonnants primaires. C'est par exemple le cas si l'agencement de ces différents éléments rayonnants primaires raccordés au même port PSᵢ forme une antenne à plaque. Dans ce cas, ces éléments rayonnants primaires sont disposés de manière à ce que le centre de phase équivalent de la source de rayonnement qu'il forme soit confondu avec le foyer FOᵢ de l'ensemble collimateur 10.

Le nombre de canaux simultanément émis par l'émetteur 2 peut être plus petit que quatre et, par exemple, aussi petit que deux canaux. Dans ce cas, le module 4 d'émission est simplifié. Par exemple, ce module 4 comporte seulement deux ports de sortie, c'est-à-dire un seul port de sortie par canal. Dans ce cas, l'ensemble 8 d'éléments rayonnants primaires peut lui aussi être simplifié. Par exemple, l'ensemble 8 comporte alors seulement deux éléments rayonnants primaires raccordés à un port de sortie respectif.

À l'inverse, le nombre de canaux du module 4 d'émission peut être supérieur à quatre. Dans ce cas, le nombre de ports de sortie et le nombre d'éléments rayonnants primaires est augmenté. Au minimum, le nombre de ports de sortie et le nombre d'éléments rayonnants primaires sont tous les deux égaux au nombre de canaux.

Les différents éléments rayonnants primaires de l'ensemble 8 ne sont pas nécessairement tous identiques. Par exemple, dans un autre mode de réalisation, chaque élément rayonnant primaire est spécialement optimisé pour rayonner principalement dans la bande de fréquences BWᵢ dans laquelle il doit travailler lorsqu'il est raccordé au port de sortie PSᵢ. L'efficacité de rayonnement de cet élément rayonnant primaire spécialement optimisé est alors meilleure quand il rayonne dans la bande de fréquences BWᵢ que dans les autres bandes de fréquences. Cette variante simplifie la conception de l'ensemble d'éléments rayonnants primaires puisque les contraintes qui pèsent sur chaque élément rayonnant primaire sont relâchées.

D'autres modes de réalisation des éléments rayonnants primaires sont possibles. Par exemple, les éléments rayonnants primaires peuvent aussi être remplacés par des fentes réalisées dans un plan de masse conducteur ou par des bandes conductrices.

L'ensemble 8 d'éléments rayonnants primaires n'est pas nécessairement planaire. En variantes, il peut aussi s'étendre le long d'une surface courbe comme, par exemple, le long d'une surface sphérique.

Dans un mode de réalisation plus complexe, l'ensemble d'éléments rayonnants primaires n'est pas imprimé sur la face d'une carte d'un circuit imprimé.

### Variantes de l'ensemble collimateur :

En variantes, l'antenne 70 plane est remplacée par une antenne secondaire non plane. Par exemple, l'antenne secondaire non plane est légèrement incurvée. Par exemple, les faces intérieure et extérieure d'une telle antenne secondaire incurvée s'étendent le long de la surface d'une première et d'une seconde sphère, toutes les deux centrées sur le même point.

Les retards introduits par les différentes liaisons de transmission d'énergie des cellules élémentaires 76 peuvent être réglés pour que la direction commune X fasse un angle d'au moins 5° ou 10° ou 25° par rapport à l'axe 48.

Dans un autre mode de réalisation, les retards introduits par les différentes cellules élémentaires sont réglables par une unité électronique de commande. Dans ce cas, en modifiant ces réglages, il est possible de modifier l'angle que fait la direction commune X avec l'axe 48. Un exemple de réalisation de telles cellules élémentaires réglables est par exemple décrit en détail dans la demande EP3125362B1.

En variante, chaque cellule élémentaires 76 modifie, de la même façon, la direction de polarisation de chaque onde OEMᵢ reçue. Par exemple, si chacune des ondes OEMᵢ présente la même polarisation rectiligne, chaque cellule élémentaire 76 transforme cette polarisation rectiligne en une polarisation circulaire. Ainsi, les ondes électromagnétiques émises par la face extérieur de l'ensemble collimateur présentent toutes la même direction de polarisation à partir du moment où les ondes OEMᵢ reçues sur la face intérieure de l'ensemble collimateur présentent toutes la même direction de polarisation. Toutefois, il n'est pas nécessaire que la direction de polarisation de l'onde OEMᵢ reçue sur la face intérieure 72 soit la même que celle de l'onde électromagnétique émise dans la bande BWᵢ par l'ensemble collimateur.

Dans un autre mode de réalisation, seules les ondes électromagnétiques rayonnées dans un nombre restreint de bandes de fréquences BWᵢ sont multiplexées en puissance dans l'air. Par exemple, seules les ondes électromagnétiques modulées dans les bandes de fréquences BW₁ et BW₂ sont rayonnées par l'ensemble collimateur dans la direction commune X. Dans ce cas, le multiplexage de puissance dans l'air se produit uniquement pour les ondes électromagnétiques contenues dans les bandes de fréquences BW₁ et BW₂. Les ondes électromagnétiques contenues dans les bandes de fréquences BW₃ et BW₄ sont rayonnées, par l'ensemble collimateur, dans des directions différentes entre elles et différentes de la direction commune X. Dans ces conditions, le multiplexage de puissance dans l'air ne se produit pas pour les ondes électromagnétiques rayonnées dans les bandes de fréquences BW₃ et BW₄. Dans une autre variante, les ondes électromagnétiques contenues dans les bandes BW₃ et BW₄ sont rayonnées par l'ensemble collimateur dans une autre direction commune différente de la direction X. Dans ce cas, le multiplexage de puissance dans l'air se produit :
- d'un côté, pour les ondes électromagnétiques rayonnées dans les bandes BW₁ et BW₂ dans la direction X, et
- d'un autre côté, pour les ondes électromagnétiques rayonnées dans les bandes BW₃ et BW₄ dans l'autre direction commune.

Une telle possibilité de rayonner dans la direction X uniquement les ondes électromagnétiques modulées dans un nombre limité de bandes de fréquences BW₁ et BW₂ est par exemple obtenue en plaçant les éléments rayonnants primaires ERP₁ et ERP₂ correspondant à ces bandes de fréquences BW₁ et BW₂ à proximité des foyers correspondants FO₁ et FO₂ et en éloignant les éléments rayonnants primaires ERP₃ et ERP₄ correspondant aux autres bandes de fréquences BW₃ et BW4 des foyers FO₃ et FO₄ correspondants.

De nombreux autres modes de réalisation de l'antenne 70 sont possibles. Par exemple, il existe de nombreux autres modes de réalisation possibles pour les cellules élémentaires. En particulier, la liaison de transfert d'énergie peut être :
- une liaison électrique qui raccorde électriquement les éléments rayonnants intérieur et extérieur, ou
- une liaison de transfert d'énergie entre les éléments rayonnants intérieur et extérieur par rayonnement à travers une ou plusieurs fentes réalisées dans le plan de masse qui sépare ces éléments rayonnants intérieur et extérieur.

En particulier, des exemples de réalisation de cellules élémentaires sont décrits dans les articles suivants :
- L. Dussopt et al. : "A V-band switched beam linearly polarized transmit-array antenna for wireless backhaul applications", IEEE Transaction on Antennas and Propagation, vol. 65, no. 12, pp. 6788-6793, Dec. 2017,
- C. Jouanlanne et al. : "Wideband linearly-polarized transmitarray antenna for 60 GHz backhauling", IEEE Transaction on Antennas and Propagation, vol. 65, no.3, pp. 1440-1445, Mar. 2017.
En particulier, dans certains modes de réalisation, la cellule élémentaire ne comporte pas de plan de masse interposé entre ses éléments rayonnants intérieur et extérieur.

Un autre exemple d'antenne à réseau transmetteur dans laquelle les cellules élémentaires présentent une bande passante à -3 dB allant de 124 GHz à 158 GHz est décrit dans l'article suivant : Zhuo-Wei Miao et Al: "140 GHz High-Gain LTCC-Integrated Transmit-Array Antenna Using a Wideband SIW Aperture-Coupling Phase Delay Structure", IEEE TRANSACTIONS ON ANTENNAS AND PROPAGATION, VOL. 66, NO. 1, JANUARY 2018.

Pour des exemples de réalisation d'antennes à réseau transmetteur à large-bande dans d'autres plages de fréquences, le lecteur peut aussi consulter les articles suivants :
- Yuehe Ge et Al: "Broadband Folded Transmitarray Antenna Based on an Ultrathin Transmission Polarizer" IEEE TRANSACTIONS ON ANTENNAS AND PROPAGATION, VOL. 66, NO. 11, NOVEMBER 2018 ;
- Ahmed H. Abdelrahman : "Bandwidth Improvement Methods of Transmitarray Antennas", IEEE TRANSACTIONS ON ANTENNAS AND PROPAGATION, VOL. 63, NO. 7, JULY 2015 ;
- Seyed Hashem Ramazannia Tuloti et Al: "High-Efficient Wideband Transmitarray Antenna", IEEE ANTENNAS AND WIRELESS PROPAGATION LETTERS, VOL. 17, NO. 5, MAY 2018 ;
- Lin Xiao et Al: "Wideband Planar Tightly Coupled Dipole Transmitarray", 13th European Conference on Antennas and Propagation (EuCAP 2019).

Dans un mode de réalisation particulier, l'antenne secondaire comporte à la fois des cellules élémentaires monobandes et des cellules élémentaires multibandes. Dans ce cas, de préférence, les cellules élémentaires multibandes sont situées au centre de l'antenne secondaire.

Dans un autre mode de réalisation particulier, l'antenne secondaire comporte des cellules élémentaires multibandes dont la bande passante à - 3 dB englobe plusieurs des bandes de fréquences BWᵢ mais pas toutes.

La bande passante à - 3dB des cellules monobandes CEᵢ peuvent aussi englober plusieurs autres bandes de fréquences BWᵢ. Toutefois, même dans ce cas, la bande passante des cellules CEᵢ utilisée lors du fonctionnement de l'antenne secondaire reste seulement la bande de fréquences BWᵢ.

D'autres modes de réalisation de l'antenne intermédiaire à réseau transmetteur sont possibles. Par exemple, l'antenne intermédiaire peut aussi être identique à l'antenne 70 sauf que, par exemple, elle comporte moins de cellules élémentaires.

En variante, l'antenne 214 dirige le rayonnement OEMₜ dans une autre direction que la direction X dans laquelle l'antenne 212 dirige cet onde OEMₜ.

### Autres variantes :

Ce qui a été décrit ici dans le cas particulier des ondes millimétriques s'applique aussi à toute onde électromagnétique ayant des fréquences situées en dehors de la bande des ondes millimétriques. Pour cela, les dimensions des antennes primaires et secondaires doivent être adaptées à la fréquence des ondes électromagnétiques émises. Par exemple, ce qui a été décrit peut être adapté aux ondes électromagnétiques ayant une fréquence supérieure à 1 MHz ou 100 MHz et inférieure à 110 GHz. Cela peut aussi être adapté au cas des ondes électromagnétiques ayant une fréquence supérieure à 170 GHz et, par exemple, inférieure à 300 GHz.

En variantes, le récepteur utilisé pour recevoir l'onde OEMₜ est réalisé différemment. Par exemple, le récepteur peut comporter successivement un circuit électrique de multiplexage de puissance et un circuit électrique de division de puissance. Par exemple, le récepteur est conçu comme l'émetteur décrit dans l'article A1 mais en remplaçant le module d'émission par un module de réception. Ce module de réception multiplexe la puissance reçue sur chacun des canaux en utilisant pour cela un circuit électrique de multiplexage de puissance suivi d'un circuit électrique de division de puissance afin de transmettre uniquement la partie du signal électrique comprise dans la bande de fréquences BWᵢ au démodulateur correspondant. Le récepteur peut aussi être un récepteur conventionnel réalisé à l'aide d'une antenne à cornet (« *horn antenna »* en anglais) et apte à mettre en œuvre un démultiplexage en fréquence de canaux.

De façon réciproque, un émetteur conventionnel réalisant un multiplexage en fréquence de canaux peut être utilisé pour rayonner l'onde OEMₜ reçue par le récepteur 100. Par exemple, l'émetteur conventionnel est identique à celui décrit dans l'article A1.

### Chapitre III : Avantages des modes de réalisation décrits :

Les avantages décrits ici dans le cas particulier de l'émetteur se retrouvent à l'identique dans le cas des récepteurs sans fil décrits ici.

Dans les différents modes de réalisation décrits ici, le multiplexage de puissance des signaux modulés est réalisé par ce qui est appelé dans cette demande un multiplexage de puissance dans l'air. En effet, il a été observé que lorsque l'ensemble collimateur est configuré pour rayonner les ondes électromagnétiques, modulées dans des bandes de fréquences différentes, dans une direction commune, alors l'onde électromagnétique plane résultante dans cette direction est la même ou pratiquement la même que celle générée, par exemple, par l'émetteur de l'article A1. Ainsi, l'émetteur décrit ici présente une directivité élevée et un gain élevé dans cette direction de propagation et une large-bande passante.

L'émetteur décrit ici présente des pertes moins élevées que l'émetteur décrit dans l'article A1. Par conséquent, les émetteurs décrits ici présentent une efficacité de rayonnement plus élevée. En effet, le multiplexage de puissance dans l'air provoque moins de pertes que lorsqu'un circuit électrique de multiplexage de puissance est mis en œuvre pour faire la même opération, notamment en bande millimétrique.

De plus, puisque dans les modes de réalisation décrits, contrairement à ce qui est fait dans l'article A1, aucun circuit électrique de multiplexage de puissance n'est mis en œuvre, les connexions électriques entre les ports de sortie PS₁ à PS₄ et les différents éléments rayonnants ERP₁ à ERP₄ sont beaucoup plus courtes. Cela réduit les pertes d'insertion et participe aussi à l'amélioration de l'efficacité de rayonnement.

Le fait que la bande passante à -3 dB de certaines cellules élémentaires englobe plusieurs bandes de fréquences BWᵢ permet d'utiliser la même cellule élémentaire multibande pour traiter des ondes électromagnétiques rayonnées dans différentes bandes de fréquences BWᵢ. Cela augmente, à encombrement égal, l'efficacité de rayonnement par rapport au mode de réalisation de la figure 4.

Le fait d'utiliser des cellules élémentaires multibandes dont la bande passante recouvre la totalité des bandes de fréquences BWᵢ permet d'augmenter encore plus l'efficacité de rayonnement de l'émetteur. De plus, cela permet, à efficacité de rayonnement égal, de réduire l'encombrement de l'antenne 70 et donc de l'émetteur 2.

Le fait de répartir les cellules élémentaires monobandes dans un même secteur de l'antenne secondaire simplifie la conception de l'antenne secondaire.

Le fait d'utiliser une carte de circuit imprimé pour réaliser l'antenne à réseau transmetteur permet de simplifier sa fabrication, de limiter son encombrement et de réduire son coût.

Le fait de réaliser les éléments rayonnants primaires sur la face avant d'une carte de circuit imprimé et de fixer le module d'émission sur la face arrière de cette même carte permet de substantiellement limiter l'encombrement de l'émetteur, ainsi que de réduire les pertes d'interconnexion entre le module d'émission et les éléments rayonnant primaires.

Le fait que l'ensemble d'éléments rayonnants primaires comporte autant d'éléments rayonnants primaires que de ports de sortie permet de raccorder directement chaque port de sortie à un seul élément rayonnant primaire. Dans ce cas, il n'est pas nécessaire d'utiliser un circuit électrique de division de puissance entre ce port de sortie et les différents éléments rayonnants primaires qui lui sont raccordés. L'absence d'un circuit électrique de division de puissance augmente encore plus l'efficacité de rayonnement de l'émetteur.

## Revendications

1. Émetteur sans fil réalisant un multiplexage en fréquence de canaux, cet émetteur comportant :
- un module (4) d'émission multicanaux comportant au moins un premier et un second ports de sortie (PS₁-PS₄) et apte à générer simultanément sur chacun de ces premier et second ports de sortie, respectivement, des premier et second signaux électriques modulés en fonction de données à transmettre sur, respectivement, des premier et second canaux spécifiques, l'essentiel de la puissance des premier et second signaux électriques modulés générés étant comprise dans, respectivement, des première et seconde bandes de fréquences réservées distinctes,
- un ensemble (8) d'éléments rayonnants primaires comportant au moins un premier et un second éléments rayonnants primaires (ERP₁-ERP₄) raccordés électriquement au premier et au second ports de sortie du module (4) d'émission, les premier et second éléments rayonnants primaires étant aptes à transformer, respectivement, les premier et second signaux électriques modulés en, respectivement, des première et seconde ondes électromagnétiques rayonnées dans l'espace, l'essentiel de la puissance de ces première et seconde ondes électromagnétiques étant compris dans, respectivement, les première et seconde bandes de fréquences,
**caractérisé en ce que** :
- l'émetteur comporte un ensemble collimateur (10; 150; 202, 204; 212, 214) à réseau transmetteur, cet ensemble collimateur étant apte :
• à transformer une onde électromagnétique rayonnée à partir d'un premier foyer (FO₁-FO₄) et dans la première bande de fréquences, en une onde électromagnétique plane de même fréquence rayonnée dans une première direction prédéterminée, et
• à transformer une onde électromagnétique rayonnée à partir d'un second foyer (FO₁-FO₄) et dans la seconde bande de fréquences, en une onde électromagnétique plane de même fréquence rayonnée dans la même première direction prédéterminée commune à ces première et seconde bandes de fréquences,
- les premier et second foyers sont situés du côté de l'ensemble (8) d'éléments rayonnants primaires et occupent des positions différentes dans l'espace,
- les premier et second éléments rayonnants primaires (ERP₁-ERP₄) sont uniquement raccordés, respectivement, aux premier et second ports de sortie (PS₁-PS₄),
- les premier et second éléments rayonnants primaires (ERP₁-ERP₄) sont positionnés par rapport à l'ensemble collimateur de manière à rayonner les première et seconde ondes électromagnétiques à partir, respectivement, des premier et second foyers (FO₁-FO₄), et
- les éléments rayonnants primaires (ERP₁-ERP₄) sont aptes à rayonner les ondes électromagnétiques dans les première et seconde bandes de fréquences avec des directions de polarisation identiques et l'ensemble collimateur est apte à conserver cette identité entre les directions de polarisation des ondes électromagnétiques rayonnées
dans lequel l'ensemble collimateur comporte une antenne secondaire (70; 150; 202, 204; 212, 214) comportant :
- une face intérieure (72) tournée vers l'ensemble (8) d'éléments rayonnants primaires,
- une face extérieure (74) située du côté opposé à la face intérieure,
- au moins quatre types différents de cellules élémentaires (76), chaque cellule élémentaire comportant :
- un élément rayonnant intérieur (78) disposé sur la face intérieure,
- un élément rayonnant extérieur (80) disposé sur la face extérieure,
- une liaison (82) de transfert d'énergie entre l'élément rayonnant intérieur et l'élément rayonnant extérieur de cette cellule élémentaire, cette liaison étant agencée pour introduire un retard prédéterminé dans ce transfert d'énergie entre les éléments rayonnants intérieur et extérieur de cette cellule élémentaire,
deux cellules élémentaires de types différents étant deux cellules élémentaires dans lesquelles les retards prédéterminés, pour une même bande de fréquences choisie dans le groupe composé des première et seconde bandes de fréquences, ont des valeurs différentes,
ces cellules élémentaires de différents types étant disposées les unes par rapport aux autres de manière à transformer les première et seconde ondes électromagnétiques en ondes électromagnétiques planes rayonnées par la face extérieure et dirigée dans la première direction.

2. Récepteur sans fil réalisant un démultiplexage en fréquence de canaux, ce récepteur comportant :
- un module (102) de réception multicanaux comportant au moins un premier et un second ports d'entrée (110-113) et apte à recevoir simultanément sur chacun de ces premier et second ports d'entrée, respectivement, des premier et second signaux électriques modulés en fonction de données transmises sur, respectivement, des premier et second canaux spécifiques, l'essentiel de la puissance des premier et second signaux électriques modulés reçues étant comprise dans, respectivement, des première et seconde bandes de fréquences réservées distinctes,
- un ensemble (8) d'éléments rayonnants primaires comportant au moins un premier et un second éléments rayonnants primaires (ERP₁-ERP₄) raccordés électriquement au premier et au second ports d'entrée du module (102) de réception, les premier et second éléments rayonnants primaires étant aptes à transformer, respectivement, des première et seconde ondes électromagnétiques rayonnées dans l'espace dans, respectivement, les première et seconde bandes de fréquences, en, respectivement, les premier et second signaux électriques modulés, l'essentiel de la puissance de ces première et seconde ondes électromagnétiques étant compris dans, respectivement, les première et seconde bandes de fréquences,
**caractérisé en ce que** :
- le récepteur comporte un ensemble collimateur (10; 150; 202, 204; 212, 214) à réseau transmetteur, cet ensemble collimateur étant apte :
- à transformer une onde électromagnétique plane reçue le long d'une première direction prédéterminée et dans la première bande de fréquences, en la première onde électromagnétique dirigée vers un premier foyer, et
- à transformer une onde électromagnétique plane reçue le long de la même première direction prédéterminée et dans la seconde bande de fréquences, en la seconde onde électromagnétique dirigée vers un second foyer,
- les premier et second foyers sont situés du côté de l'ensemble (8) d'éléments rayonnants primaires et occupent des positions différentes dans l'espace,
- les premier et second éléments rayonnants primaires (ERP₁-ERP₄) sont uniquement raccordés, respectivement, aux premier et second ports d'entrée (110-113),
- les premier et second éléments rayonnants primaires (ERP₁-ERP₄) sont positionnés par rapport à l'ensemble collimateur de manière à recevoir, respectivement, la première onde électromagnétique dirigée vers le premier foyer (FO₁-FO₄) et la seconde onde électromagnétique dirigée vers le second foyer (FO₁-FO₄), et
- l'ensemble collimateur est apte à conserver l'identité entre les directions de polarisation des ondes électromagnétiques reçues dans les première et seconde bandes de fréquences et les premier et second éléments rayonnants primaires (ERP₁-ERP₄) sont aptes à transformer les première et seconde ondes électromagnétiques reçues dans les première et seconde bandes de fréquences avec des directions de polarisation identiques
dans lequel l'ensemble collimateur comporte une antenne secondaire (70; 150; 202, 204; 212, 214) comportant :
- une face intérieure (72) tournée vers l'ensemble (8) d'éléments rayonnants primaires,
- une face extérieure (74) située du côté opposé à la face intérieure,
- au moins quatre types différents de cellules élémentaires (76), chaque cellule élémentaire comportant :
- un élément rayonnant intérieur (78) disposé sur la face intérieure,
- un élément rayonnant extérieur (80) disposé sur la face extérieure,
- une liaison (82) de transfert d'énergie entre l'élément rayonnant intérieur et l'élément rayonnant extérieur de cette cellule élémentaire, cette liaison étant agencée pour introduire un retard prédéterminé dans ce transfert d'énergie entre les éléments rayonnants intérieur et extérieur de cette cellule élémentaire,
deux cellules élémentaires de types différents étant deux cellules élémentaires dans lesquelles les retards prédéterminés, pour une même bande de fréquences choisie dans le groupe composé des première et seconde bandes de fréquences, ont des valeurs différentes,
ces cellules élémentaires de différents types étant disposées les unes par rapport aux autres de manière à transformer une onde électromagnétique plane reçue sur sa face extérieure le long de la première direction et dans les première et seconde bandes de fréquences, en, respectivement, la première et la seconde ondes électromagnétiques rayonnées par la face intérieure.

3. Émetteur selon la revendication 1 ou récepteur selon la revendication 2, dans lequel au moins certaines des cellules élémentaires (76) de l'antenne secondaire sont des cellules élémentaires multibandes utilisées pour transformer à la fois les première et seconde ondes électromagnétiques en ondes électromagnétiques planes rayonnées dans la première direction, ces cellules élémentaires multibandes présentant chacune une bande passante à -3 dB qui englobe entièrement la première et la seconde bandes de fréquences et pour lesquelles les retards prédéterminés introduits dans chacune de ces première et seconde bandes de fréquences sont différents, ces cellules élémentaires multibandes étant placées à l'intérieur d'une zone à cheval entre un premier secteur de l'antenne secondaire contenant toutes et seulement les cellules élémentaires utilisées pour transformer la première onde électromagnétique en une onde plane rayonnée dans la première direction et un second secteur de l'antenne secondaire contenant toutes et seulement les cellules élémentaires utilisées pour transformer la seconde onde électromagnétique en une onde plane rayonnée dans la première direction.

4. Émetteur ou récepteur selon la revendication 3, dans lequel l'antenne secondaire (70) comporte uniquement des cellules élémentaires multibandes et les premier et second secteurs de l'antenne secondaire sont confondus.

5. Émetteur selon la revendication 1ou récepteur selon la revendication 2, dans lequel :
- toutes les cellules élémentaires (CE₁₋CE₄) de l'antenne secondaire (150) utilisées pour transformer la première onde électromagnétique en une onde plane rayonnée dans la première direction sont placées à cet effet uniquement à l'intérieur d'un premier secteur convexe (St₁-St₄) de l'antenne secondaire contenant toutes et seulement les cellules élémentaires utilisées pour transformer la première onde électromagnétique en une onde plane rayonnée dans la première direction, et
- toutes les cellules élémentaires (CE₁₋CE₄) de l'antenne secondaire (150) utilisées pour transformer la seconde onde électromagnétique en une onde plane rayonnée dans la première direction sont placées à cet effet uniquement à l'intérieur d'un second secteur convexe (St₁-St₄) de l'antenne secondaire contenant toutes et seulement les cellules élémentaires utilisées pour transformer la seconde onde électromagnétique en une onde plane rayonnée dans la première direction, ce second secteur ne chevauchant pas le premier secteur,
les cellules élémentaires placées à l'intérieur du premier secteur présentant chacune une bande passante à -3 dB qui englobe entièrement la première bande de fréquences et les cellules élémentaires placées à l'intérieur du second secteur présentant chacune une bande passante à -3 dB qui englobe entièrement la seconde bande de fréquences.

6. Émetteur selon l'une quelconque des revendications 1 et 3 à 5 ou récepteur selon l'une quelconque des revendications 2 à 5, dans lequel l'ensemble collimateur comporte, en plus de l'antenne secondaire, une antenne intermédiaire (212) à réseau transmetteur interposée entre l'ensemble (8) d'éléments rayonnants primaires et l'antenne secondaire (214), cette antenne intermédiaire comportant :
- une face intérieure tournée vers l'ensemble (8) d'éléments rayonnants primaires,
- une face extérieure tournée vers la face intérieure de l'antenne secondaire,
- au moins quatre types différents de cellules élémentaires, ces cellules élémentaires de différents types étant disposées les unes par rapport aux autres de manière :
- à transformer les première et seconde ondes électromagnétiques reçues sur la face intérieure de l'antenne intermédiaire en ondes électromagnétiques planes rayonnées, par la face extérieure de l'antenne intermédiaire, dans une seconde direction commune vers la face intérieure de l'antenne secondaire, et
- à transformer une onde électromagnétique plane reçue sur la face extérieure de l'antenne intermédiaire le long de la seconde direction commune et dans les première et seconde bandes de fréquences, en, respectivement, la première et la seconde ondes électromagnétiques rayonnées par la face intérieure de l'antenne intermédiaire vers, respectivement, les premier et second foyers.

7. Émetteur selon l'une quelconque des revendications 1 et 3 à 5 ou récepteur selon l'une quelconque des revendications 2 à 5, dans lequel l'ensemble collimateur comporte, en plus de l'antenne secondaire, une antenne intermédiaire (202) à réseau transmetteur interposée entre l'ensemble (8) d'éléments rayonnants primaires et l'antenne secondaire (204), cette antenne intermédiaire comportant :
- une face intérieure tournée vers l'ensemble (8) d'éléments rayonnants primaires,
- une face extérieure tournée vers la face intérieure de l'antenne secondaire,
- au moins quatre types différents de cellules élémentaires, ces cellules élémentaires de différents types étant disposées les unes par rapport aux autres de manière à transformer les première et seconde ondes électromagnétiques en ondes électromagnétiques, rayonnées par la face extérieure de l'antenne intermédiaire, dont les cônes d'illumination, aussi bien dans la première que dans la seconde bandes de fréquences, contiennent chacun entièrement la face intérieure de l'antenne secondaire.

8. Émetteur selon l'une quelconque des revendications 1 et 3 à 7 ou récepteur selon l'une quelconque des revendications 2 à 7, dans lequel l'ensemble d'éléments rayonnants primaires comporte un seul premier et un seul second éléments rayonnants primaires (ERP₁-ERP₄).

9. Émetteur selon l'une quelconque des revendications 1 et 3 à 8 ou récepteur selon l'une quelconque des revendications 2 à 8, dans lequel les faces intérieure et extérieure de l'antenne secondaire sont les faces d'une carte (86) de circuit imprimé comportant au moins deux couches de métallisation, les éléments rayonnants intérieur et extérieur étant réalisés par gravure de la couche de métallisation située, respectivement, sur les faces intérieure et extérieure de la carte du circuit imprimé.

10. Émetteur ou récepteur selon la revendication 9, dans lequel chaque cellule élémentaire de l'antenne secondaire comporte également un plan de masse s'étendant entre chaque élément rayonnant intérieur et extérieur, ce plan de masse étant réalisé dans une couche intermédiaire de métallisation située entre les couches de métallisation utilisées pour réaliser les éléments rayonnants intérieur et extérieur.

11. Émetteur selon l'une quelconque des revendications 1 ou 3 à 10, ou récepteur selon l'une quelconque des revendications 2 à 10, dans lequel :
- l'ensemble d'éléments rayonnants primaires comporte une carte (50) de circuit imprimé présentant une face avant tournée vers l'ensemble collecteur et une face arrière du côté opposé,
- les éléments rayonnants primaires (ERP₁-ERP₄) sont réalisés dans une couche de métallisation de la face avant de cette carte,
- le module d'émission ou de réception est fixé sur la face arrière de cette carte de circuit imprimé, et
- les éléments rayonnants primaires sont électriquement raccordés aux ports de sortie ou d'entrée respectifs par l'intermédiaire de via électrique (64) traversant l'épaisseur de cette carte de circuit imprimé ou les éléments rayonnants primaires sont électriquement raccordés aux ports de sortie ou d'entrée respectifs par l'intermédiaire de couplages électromagnétiques respectifs à travers l'épaisseur de cette carte de circuit imprimé.

## Patentansprüche

1. Drahtloser Sender, der ein Frequenzmultiplexing von Kanälen ausführt, wobei dieser Sender umfasst:
- ein mehrkanaliges Sendemodul (4), das mindestens einen ersten und einen zweiten Ausgangsport (PS₁-PS₄) umfasst und geeignet ist, gleichzeitig über jeden dieser ersten und zweiten Ausgangsports erste beziehungsweise zweite elektrische Signale zu erzeugen, die in Abhängigkeit von Daten moduliert sind, die über erste beziehungsweise zweite spezifische Kanäle zu übertragen sind, wobei der Großteil der Leistung der ersten und zweiten erzeugten modulierten elektrischen Signale in ersten beziehungsweise zweiten verschiedenen reservierten Frequenzbändern enthalten ist,
- eine Anordnung (8) aus Primärstrahlern, die mindestens einen ersten und einen zweiten Primärstrahler (ERP₁-ERP₄) umfasst, die elektrisch an den ersten und an den zweiten Ausgangsport des Sendemoduls (4) angeschlossen sind, wobei die ersten und zweiten Primärstrahler geeignet sind, die ersten und zweiten modulierten elektrischen Signale in erste beziehungsweise zweite in den Raum abgestrahlte elektromagnetische Wellen umzuwandeln, wobei der Großteil der Leistung dieser ersten und zweiten elektromagnetischen Wellen in den ersten beziehungsweise zweiten Frequenzbändern enthalten ist,
**dadurch gekennzeichnet, dass**:
- der Sender eine Kollimatoranordnung (10; 150; 202, 204; 212, 214) mit Transmitarray umfasst, wobei diese Kollimatoranordnung geeignet ist:
• eine von einem ersten Brennpunkt (FO₁-FO₄) aus und in dem ersten Frequenzband abgestrahlte elektromagnetische Welle in eine frequenzgleiche ebene elektromagnetische Welle umzuwandeln, die in eine vorbestimmte erste Richtung abgestrahlt wird, und
• eine von einem zweiten Brennpunkt (FO₁-FO₄) aus und in dem zweiten Frequenzband abgestrahlte elektromagnetische Welle in eine frequenzgleiche ebene elektromagnetische Welle umzuwandeln, die in die gleiche vorbestimmte erste Richtung abgestrahlt wird, die diesen ersten und zweiten Frequenzbändern gemeinsam ist,
- die ersten und zweiten Brennpunkte auf der Seite der Anordnung (8) aus Primärstrahlern gelegen sind und unterschiedliche Positionen im Raum einnehmen,
- die ersten und zweiten Primärstrahler (ERP₁-ERP₄) nur an die ersten beziehungsweise zweiten Ausgangsports (PS₁-PS₄) angeschlossen sind,
- die ersten und zweiten Primärstrahler (ERP₁-ERP₄) in Bezug auf die Kollimatoranordnung so positioniert sind, dass sie die ersten und zweiten elektromagnetischen Wellen von dem ersten beziehungsweise zweiten Brennpunkt (FO₁-FO₄) aus abstrahlen, und
- die Primärstrahler (ERP₁-ERP₄) geeignet sind, die elektromagnetischen Wellen in den ersten und zweiten Frequenzbändern mit identischen Polarisationsrichtungen abzustrahlen, und die Kollimatoranordnung geeignet ist, diese Identität zwischen den Polarisationsrichtungen der abgestrahlten elektromagnetischen Wellen beizubehalten,
wobei die Kollimatoranordnung eine sekundäre Antenne (70; 150; 202, 204; 212, 214) umfasst, die umfasst:
- eine Innenseite (72), die zu der Anordnung (8) aus Primärstrahlern gewandt ist,
- eine Außenseite (74), die auf der zur Innenseite entgegengesetzten Seite gelegen ist,
- mindestens vier unterschiedliche Typen von Elementarzellen (76), wobei jede Elementarzelle umfasst:
- einen inneren Strahler (78), der auf der Innenseite angeordnet ist,
- einen äußeren Strahler (80), der auf der Außenseite angeordnet ist,
- eine Verbindung (82) zum Energietransfer zwischen dem inneren Strahler und dem äußeren Strahler dieser Elementarzelle, wobei diese Verbindung dazu eingerichtet ist, eine vorbestimmte Verzögerung in diesen Energietransfer zwischen den inneren und äußeren Strahlern dieser Elementarzelle einzufügen,
wobei zwei Elementarzellen unterschiedlicher Typen zwei Elementarzellen sind, bei denen die vorbestimmten Verzögerungen für ein selbes Frequenzband, das aus der Gruppe gewählt ist, die aus den ersten und zweiten Frequenzbändern besteht, unterschiedliche Werte haben,
wobei diese Elementarzellen unterschiedlicher Typen zueinander so angeordnet sind, dass sie die ersten und zweiten elektromagnetischen Wellen in ebene Wellen umwandeln, die von der Außenseite abgestrahlt werden und in die erste Richtung gerichtet sind.

2. Drahtloser Empfänger, der ein Frequenzdemultiplexing von Kanälen ausführt, wobei dieser Empfänger umfasst:
- ein mehrkanaliges Empfangsmodul (102), das mindestens einen ersten und einen zweiten Eingangsport (110-113) umfasst und geeignet ist, über jeden dieser ersten und zweiten Eingangsports gleichzeitig erste beziehungsweise zweite elektrische Signale zu empfangen, die in Abhängigkeit von Daten moduliert sind, die über erste beziehungsweise zweite spezifische Kanäle übertragen werden, wobei der Großteil der Leistung der ersten und zweiten empfangenen modulierten elektrischen Signale in ersten beziehungsweise zweiten verschiedenen reservierten Frequenzbändern enthalten ist,
- eine Anordnung (8) aus Primärstrahlern, die mindestens einen ersten und einen zweites Primärstrahler (ERP₁-ERP₄) umfasst, die elektrisch an den ersten und an den zweiten Eingangsport des Empfangsmoduls (102) angeschlossen sind, wobei die ersten und zweiten Primärstrahler geeignet sind, erste und zweite elektromagnetische Wellen, die in ersten beziehungsweise zweiten Frequenzbändern in den Raum abgestrahlt werden, in erste beziehungsweise zweite modulierte elektrische Signale umzuwandeln, wobei der Großteil der Leistung dieser ersten und zweiten elektromagnetischen Wellen in den ersten beziehungsweise zweiten Frequenzbändern enthalten ist,
**dadurch gekennzeichnet, dass**:
- der Empfänger eine Kollimatoranordnung (10; 150; 202, 204; 212, 214) mit Transmitarray umfasst, wobei diese Kollimatoranordnung geeignet ist:
- eine ebene elektromagnetische Welle, die entlang einer vorbestimmten ersten Richtung und in dem ersten Frequenzband empfangen wird, in die zu einem ersten Brennpunkt gerichtete erste elektromagnetische Welle umzuwandeln, und
- eine ebene elektromagnetische Welle, die entlang der gleichen vorbestimmten ersten Richtung und in dem zweiten Frequenzband empfangen wird, in die zu einem zweiten Brennpunkt gerichtete zweite elektromagnetische Welle umzuwandeln,
- die ersten und zweiten Brennpunkte auf der Seite der Anordnung (8) aus Primärstrahlern gelegen sind und unterschiedliche Positionen im Raum einnehmen,
- die ersten und zweiten Primärstrahler (ERP₁-ERP₄) nur an die ersten beziehungsweise zweiten Eingangsports (110-113) angeschlossen sind,
- die ersten und zweiten Primärstrahler (ERP₁-ERP₄) in Bezug auf die Kollimatoranordnung so positioniert sind, dass die zu dem ersten Brennpunkt (FO₁-FO₄) gerichtete erste elektromagnetische Welle beziehungsweise die zu dem zweiten Brennpunkt (FO₁-FO₄) gerichtete zweite elektromagnetische Welle empfangen werden, und
- die Kollimatoranordnung geeignet ist, die Identität zwischen den Polarisationsrichtungen der in den ersten und zweiten Frequenzbändern empfangenen elektromagnetischen Wellen beizubehalten, und die ersten und zweiten Primärstrahler (ERP₁-ERP₄) geeignet sind, die in den ersten und zweiten Frequenzbändern mit identischen Polarisationsrichtungen empfangenen ersten und zweiten elektromagnetischen Wellen umzuwandeln,
wobei die Kollimatoranordnung eine sekundäre Antenne (70; 150; 202, 204; 212, 214) umfasst, die umfasst:
- eine Innenseite (72), die zu der Anordnung (8) aus Primärstrahlern gewandt ist,
- eine Außenseite (74), die auf der zur Innenseite entgegengesetzten Seite gelegen ist,
- mindestens vier unterschiedliche Typen von Elementarzellen (76), wobei jede Elementarzelle umfasst:
- einen inneren Strahler (78), der auf der Innenseite angeordnet ist,
- einen äußeren Strahler (80), der auf der Außenseite angeordnet ist,
- eine Verbindung (82) zum Energietransfer zwischen dem inneren Strahler und dem äußeren Strahler dieser Elementarzelle, wobei diese Verbindung dazu eingerichtet ist, eine vorbestimmte Verzögerung in diesen Energietransfer zwischen den inneren und äußeren Strahlern dieser Elementarzelle einzufügen,
wobei zwei Elementarzellen unterschiedlicher Typen zwei Elementarzellen sind, bei denen die vorbestimmten Verzögerungen für ein selbes Frequenzband, das aus der Gruppe gewählt ist, die aus den ersten und zweiten Frequenzbändern besteht, unterschiedliche Werte haben,
wobei diese Elementarzellen unterschiedlicher Typen zueinander so angeordnet sind, dass sie eine auf ihrer Außenseite entlang der ersten Richtung und in den ersten und zweiten Frequenzbändern empfangene ebene elektromagnetische Welle in erste und zweite von der Innenseite abgestrahlte elektromagnetische Wellen umwandeln.

3. Sender nach Anspruch 1 oder Empfänger nach Anspruch 2, wobei mindestens einige der Elementarzellen (76) der sekundären Antenne mehrbandige Elementarzellen sind, die dazu verwendet werden, sowohl die ersten als auch die zweiten elektromagnetische Wellen in ebene elektromagnetische Wellen umzuwandeln, die in die erste Richtung abgestrahlt werden, wobei diese mehrbandigen Elementarzellen jeweils ein Durchlassband mit -3 dB aufweisen, das die ersten und zweiten Frequenzbänder vollständig beinhaltet und bei denen die in jedes dieser ersten und zweiten Frequenzbänder eingefügten vorbestimmten Verzögerungen unterschiedlich sind, wobei diese mehrbandigen Elementarzellen innerhalb eines Bereichs platziert sind, der zwischen einem ersten Sektor der sekundären Antenne, der alle und nur die Elementarzellen enthält, die dazu verwendet werden, die erste elektromagnetische Welle in eine in die erste Richtung abgestrahlte ebene Welle umzuwandeln, und einem zweiten Sektor der sekundären Antenne, der alle und nur die Elementarzellen enthält, die dazu verwendet werden, die zweite elektromagnetische Welle in eine in die erste Richtung abgestrahlte ebene Welle umzuwandeln, platziert ist.

4. Sender oder Empfänger nach Anspruch 3, wobei die sekundäre Antenne (70) nur mehrbandige Elementarzellen umfasst und die ersten und zweiten Sektoren der sekundären Antenne zusammenfallen.

5. Sender nach Anspruch 1 oder Empfänger nach Anspruch 2, wobei:
- alle Elementarzellen (CE₁₋CE₄) der sekundären Antenne (150), die dazu verwendet werden, die erste elektromagnetische Welle in eine in die erste Richtung abgestrahlte ebene Welle umzuwandeln, zu diesem Zweck nur innerhalb eines ersten konvexen Sektors (St₁-St₄) der sekundären Antenne platziert sind, der alle und nur die Elementarzellen enthält, die dazu verwendet werden, die erste elektromagnetische Welle in eine in die erste Richtung abgestrahlte ebene Welle umzuwandeln, und
- alle Elementarzellen (CE₁₋CE₄) der sekundären Antenne (150), die dazu verwendet werden, die zweite elektromagnetische Welle in eine in die erste Richtung abgestrahlte ebene Welle umzuwandeln, zu diesem Zweck nur innerhalb eines zweiten konvexen Sektors (St₁-St₄) der sekundären Antenne platziert sind, der alle und nur die Elementarzellen enthält, die dazu verwendet werden, die zweite elektromagnetische Welle in eine in die erste Richtung abgestrahlte ebene Welle umzuwandeln, wobei dieser zweite Sektor den ersten Sektor nicht überlappt,
wobei die innerhalb des ersten Sektors platzierten Elementarzellen jeweils ein Durchlassband mit -3 dB aufweisen, welches das erste Frequenzband vollständig beinhaltet, und die innerhalb des zweiten Sektors platzierten Elementarzellen jeweils ein Durchlassband mit -3 dB aufweisen, welches das zweite Frequenzband vollständig beinhaltet.

6. Sender nach einem der Ansprüche 1 und 3 bis 5 oder Empfänger nach einem der Ansprüche 2 bis 5, wobei die Kollimatoranordnung zusätzlich zu der sekundären Antenne eine Zwischenantenne (212) mit Transmitarray umfasst, die zwischen der Anordnung (8) aus Primärstrahlern und der sekundären Antenne (214) angeordnet ist, wobei diese Zwischenantenne umfasst:
- eine Innenseite, die zu der Anordnung (8) aus Primärstrahlern gewandt ist,
- eine Außenseite, die zu der Innenseite der sekundären Antenne gewandt ist,
- mindestens vier unterschiedliche Typen von Elementarzellen, wobei diese Elementarzellen unterschiedlicher Typen zueinander so angeordnet sind, dass:
- die auf der Innenseite der Zwischenantenne empfangenen ersten und zweiten elektromagnetischen Wellen in ebene elektromagnetische Wellen umgewandelt werden, die von der Außenseite der Zwischenantenne in eine gemeinsame zweite Richtung zu der Innenseite der sekundären Antenne hin abgestrahlt werden, und
- eine auf der Außenseite der Zwischenantenne entlang der gemeinsamen zweiten Richtung und in den ersten und zweiten Frequenzbändern empfangene ebene elektromagnetische Welle in die erste beziehungsweise zweite elektromagnetische Welle umgewandelt wird, die von der Innenseite der Zwischenantenne zu dem ersten beziehungsweise zweiten Brennpunkt abgestrahlt werden.

7. Sender nach einem der Ansprüche 1 und 3 bis 5 oder Empfänger nach einem der Ansprüche 2 bis 5, wobei die Kollimatoranordnung zusätzlich zu der sekundären Antenne eine Zwischenantenne (202) mit Transmitarray umfasst, die zwischen der Anordnung (8) aus Primärstrahlern und der sekundären Antenne (204) angeordnet ist, wobei diese Zwischenantenne umfasst:
- eine Innenseite, die zu der Anordnung (8) aus Primärstrahlern gewandt ist,
- eine Außenseite, die zu der Innenseite der sekundären Antenne gewandt ist,
- mindestens vier unterschiedliche Typen von Elementarzellen, wobei diese Elementarzellen unterschiedlicher Typen zueinander so angeordnet sind, dass sie die ersten und zweiten elektromagnetischen Wellen in elektromagnetische Wellen umwandeln, die von der Außenseite der Zwischenantenne abgestrahlt werden und deren Beleuchtungskegel, sowohl in dem ersten als auch in dem zweiten Frequenzband, jeweils die Innenseite der sekundären Antenne vollständig enthält.

8. Sender nach einem der Ansprüche 1 und 3 bis 7 oder Empfänger nach einem der Ansprüche 2 bis 7, wobei die Anordnung aus Primärstrahlern nur einen einzigen ersten und einen einzigen zweiten Primärstrahler (ERP₁-ERP₄) umfasst.

9. Sender nach einem der Ansprüche 1 und 3 bis 8 oder Empfänger nach einem der Ansprüche 2 bis 8, wobei die Innen- und Außenseiten der sekundären Antenne die Seiten einer Leiterplatte (86) sind, die mindestens zwei Metallisierungsschichten umfasst, wobei die inneren und äußeren Strahler durch Ätzen der Metallisierungsschicht ausgeführt sind, die auf der Innen- beziehungsweise Außenseite der Leiterplatte gelegen ist.

10. Sender oder Empfänger nach Anspruch 9, wobei jede Elementarzelle der sekundären Antenne auch eine Masseebene umfasst, die sich zwischen jedem inneren und äußeren Strahler erstreckt, wobei diese Masseebene in einer Metallisierungszwischenschicht ausgeführt ist, die zwischen den zum Ausführen der inneren und äußeren Strahler verwendeten Metallisierungsschichten gelegen ist.

11. Sender nach einem der Ansprüche 1 oder 3 bis 10 oder Empfänger nach einem der Ansprüche 2 bis 10, wobei:
- die Anordnung aus Primärstrahlern eine Leiterplatte (50) umfasst, die eine zu der Kollektoranordnung gewandte Vorderseite und eine Rückseite auf der entgegengesetzten Seite aufweist,
- die Primärstrahler (ERP₁-ERP₄) in einer Metallisierungsschicht der Vorderseite dieser Platte ausgeführt sind,
- das Sende- oder Empfangsmodul auf der Rückseite dieser Leiterplatte befestigt ist, und
- die Primärstrahler elektrisch an die jeweiligen Ausgangs- oder Eingangsports über eine elektrische Durchkontaktierung (64) angeschlossen sind, welche die Dicke dieser Leiterplatte durchquert, oder die Primärstrahler elektrisch an die jeweiligen Ausgangs- oder Eingangsports über jeweilige elektromagnetische Kopplungen durch die Dicke dieser Leiterplatte hindurch angeschlossen sind.

## Claims

1. Wireless transmitter that performs frequency multiplexing of channels, this transmitter comprising:
- a multichannel transmitting module (4) comprising at least first and second output ports (PS₁-PS₄) and able to simultaneously generate, on each of these first and second output ports, respectively, first and second electrical signals that are modulated depending on data to be transmitted over first and second specific channels, respectively, most of the power of the first and second generated modulated electrical signals being comprised in first and second separate reserved frequency bands, respectively,
- a set (8) of primary radiating elements comprising at least first and second primary radiating elements (ERP₁-ERP₄) that are electrically connected to the first and second output ports of the transmitting module (4), the first and second primary radiating elements being able to convert, respectively, the first and second modulated electrical signals into first and second electromagnetic waves that are radiated into space, respectively, most of the power of these first and second electromagnetic waves being comprised in the first and second frequency bands, respectively,
**characterized in that**:
- the transmitter comprises a transmit-array collimating assembly (10; 150; 202, 204; 212, 214), this collimating assembly being able:
• to convert an electromagnetic wave radiated from a first focal point (FO₁-FO₄) and in the first frequency band, into a plane electromagnetic wave of same frequency radiated in a preset first direction, and
• to convert an electromagnetic wave radiated from a second focal point (FO₁-FO₄) and in the second frequency band, into a plane electromagnetic wave of same frequency radiated in the same preset first direction, this direction being common to these first and second frequency bands,
- the first and second focal points are located on the side of the set (8) of primary radiating elements and occupy different spatial positions,
- the first and second primary radiating elements (ERP₁-ERP₄) are solely connected to the first and second output ports, respectively (PS₁-PS₄),
- the first and second primary radiating elements (ERP₁-ERP₄) are positioned, with respect to the collimating assembly, so as to radiate the first and second electromagnetic waves from the first and second focal points (FO₁-FO₄), respectively, and
- the primary radiating elements (ERP₁-ERP₄) are able to radiate the electromagnetic waves in the first and second frequency bands with identical polarization directions and the collimating assembly is able to preserve this identity between the polarization directions of the radiated electromagnetic waves,
wherein the collimating assembly comprises a secondary antenna (70; 150; 202, 204; 212, 214), comprising:
- an interior face (72) turned toward the set (8) of primary radiating elements,
- an exterior face (74) located on the side opposite the interior face,
- at least four different types of elementary cells (76), each elementary cell comprising:
- an interior radiating element (78) placed on the interior face,
- an exterior radiating element (80) placed on the exterior face,
- a link (82) for transferring energy between the interior radiating element and the exterior radiating element of this elementary cell, this link being arranged to introduce a preset delay into this energy transfer between the interior and exterior radiating elements of this elementary cell,
two elementary cells of different types being two elementary cells in which the preset delays, for a given frequency band chosen from the group composed of the first and second frequency bands, have different values,
these elementary cells of various types being placed with respect to one another so as to convert the first and second electromagnetic waves into plane electromagnetic waves radiated via the exterior face and directed in the first direction.

2. Wireless receiver that performs frequency demultiplexing of channels, this receiver comprising:
- a multichannel receiving module (102) comprising at least first and second input ports (110-113) and able to simultaneously receive, via each of these first and second input ports, respectively, first and second electrical signals that are modulated depending on data transmitted over first and second specific channels, respectively, most of the power of the first and second received modulated electrical signals being comprised in first and second separate reserved frequency bands, respectively,
- a set (8) of primary radiating elements comprising at least first and second primary radiating elements (ERP₁-ERP₄) that are electrically connected to the first and second input ports of the receiving module (102), the first and second primary radiating elements being able to convert, respectively, first and second electromagnetic waves radiated into space in the first and second frequency bands, respectively, into first and second modulated electrical signals, respectively, most of the power of these first and second electromagnetic waves being comprised in the first and second frequency bands, respectively,
**characterized in that**:
- the receiver comprises a transmit-array collimating assembly (10; 150; 202, 204; 212, 214), this collimating assembly being able:
- to convert a plane electromagnetic wave received along a preset first direction and in the first frequency band, into the first electromagnetic wave directed toward a first focal point, and
- to convert a plane electromagnetic wave received along the same preset first direction and in the second frequency band, into the second electromagnetic wave directed toward a second focal point,
- the first and second focal points are located on the side of the set (8) of primary radiating elements and occupy different spatial positions,
- the first and second primary radiating elements (ERP₁-ERP₄) are solely connected to the first and second input ports (110-113), respectively,
- the first and second primary radiating elements (ERP₁-ERP₄) are positioned, with respect to the collimating assembly, so as to receive the first electromagnetic wave directed toward the first focal point (FO₁-FO₄) and the second electromagnetic wave directed toward the second focal point (FO₁-FO₄), respectively, and
- the collimating assembly is able to preserve the identity between the polarization directions of the electromagnetic waves received in the first and second frequency bands and the first and second primary radiating elements (ERP₁-ERP₄) are able to convert the first and second electromagnetic waves received in the first and second frequency bands with identical polarization directions,
wherein the collimating assembly comprises a secondary antenna (70; 150; 202, 204; 212, 214), comprising:
- an interior face (72) turned toward the set (8) of primary radiating elements,
- an exterior face (74) located on the side opposite the interior face,
- at least four different types of elementary cells (76), each elementary cell comprising:
- an interior radiating element (78) placed on the interior face,
- an exterior radiating element (80) placed on the exterior face,
- a link (82) for transferring energy between the interior radiating element and the exterior radiating element of this elementary cell, this link being arranged to introduce a preset delay into this energy transfer between the interior and exterior radiating elements of this elementary cell,
two elementary cells of different types being two elementary cells in which the preset delays, for a given frequency band chosen from the group composed of the first and second frequency bands, have different values,
these elementary cells of various types being placed with respect to one another so as to convert a plane electromagnetic wave received via its exterior face along the first direction and in the first and second frequency bands into the first and second electromagnetic waves radiated via the interior face, respectively.

3. Transmitter according to Claim 1 or receiver according to Claim 2, wherein at least certain of the elementary cells (76) of the secondary antenna are multiband elementary cells used to convert both the first and second electromagnetic waves into plane electromagnetic waves radiated in the first direction, these multiband elementary cells each having a -3 dB passband that entirely covers the first and second frequency bands and being such that the preset delays introduced into each of these first and second frequency bands are different, these multiband elementary cells being placed in a region of overlap between a first sector of the secondary antenna containing all of and only the elementary cells used to convert the first electromagnetic wave into a plane wave radiated in the first direction and a second sector of the secondary antenna containing all of and only the elementary cells used to convert the second electromagnetic wave into a plane wave radiated in the first direction.

4. Transmitter or receiver according to Claim 3, wherein the secondary antenna (70) comprises solely multiband elementary cells and the first and second sectors of the secondary antenna coincide.

5. Transmitter according to Claim 1 or receiver according to Claim 2, wherein:
- all the elementary cells (CE₁₋CE₄) of the secondary antenna (150) that are used to convert the first electromagnetic wave into a plane wave radiated in the first direction are placed, to this end, solely in a first convex sector (St₁-St₄) of the secondary antenna containing all of and only the elementary cells used to convert the first electromagnetic wave into a plane wave radiated in the first direction, and
- all the elementary cells (CE₁₋CE₄) of the secondary antenna (150) that are used to convert the second electromagnetic wave into a plane wave radiated in the first direction are placed, to this end, solely in a second convex sector (St₁-St₄) of the secondary antenna containing all of and only the elementary cells used to convert the second electromagnetic wave into a plane wave radiated in the first direction, this second sector not overlapping the first sector,
the elementary cells placed in the first sector each having a -3 dB passband that entirely covers the first frequency band and the elementary cells placed in the second sector each having a -3 dB passband that entirely covers the second frequency band.

6. Transmitter according to any of Claims 1 and 3 to 5 or receiver according to any of Claims 2 to 5, wherein the collimating assembly comprises, in addition to the secondary antenna, an intermediate transmit-array antenna (212) interposed between the set (8) of primary radiating elements and the secondary antenna (214), this intermediate antenna comprising:
- an interior face turned toward the set (8) of primary radiating elements,
- an exterior face turned toward the interior face of the secondary antenna,
- at least four different types of elementary cells, these elementary cells of various types being placed with respect to one another so as:
- to convert the first and second electromagnetic waves received via the interior face of the intermediate antenna into plane electromagnetic waves that are radiated, via the exterior face of the intermediate antenna, in a common second direction toward the interior face of the secondary antenna, and
- to convert a plane electromagnetic wave received via the exterior face of the intermediate antenna along the common second direction and in the first and second frequency bands into, respectively, the first and second electromagnetic waves radiated via the interior face of the intermediate antenna toward the first and second focal points, respectively.

7. Transmitter according to any of Claims 1 and 3 to 5 or receiver according to any of Claims 2 to 5, wherein the collimating assembly comprises, in addition to the secondary antenna, an intermediate transmit-array antenna (202) interposed between the set (8) of primary radiating elements and the secondary antenna (204), this intermediate antenna comprising:
- an interior face turned toward the set (8) of primary radiating elements,
- an exterior face turned toward the interior face of the secondary antenna,
- at least four different types of elementary cells, these elementary cells of various types being placed with respect to one another so as to convert the first and second electromagnetic waves into electromagnetic waves radiated via the exterior face of the intermediate antenna, the irradiation cones of these electromagnetic waves each entirely containing, both in the first and in the second frequency band, the interior face of the secondary antenna.

8. Transmitter according to any of Claims 1 and 3 to 7 or receiver according to any of Claims 2 to 7, wherein the set of primary radiating elements comprises a single first and a single second primary radiating element (ERP₁-ERP₄).

9. Transmitter according to any of Claims 1 and 3 to 8 or receiver according to any of Claims 2 to 8, wherein the interior and exterior faces of the secondary antenna are the faces of a printed circuit board (86) comprising at least two metallization layers, the interior and exterior radiating elements being produced by etching the metallization layer located on the interior and exterior faces of the printed circuit board, respectively.

10. Transmitter or receiver according to Claim 9, wherein each elementary cell of the secondary antenna also comprises a ground plane lying between each interior and exterior radiating element, this ground plane being produced in an intermediate metallization layer located between the metallization layers used to produce the interior and exterior radiating elements.

11. Transmitter according to any of Claims 1 or 3 to 10 or receiver according to any of Claims 2 to 10, wherein:
- the set of primary radiating elements comprises a printed circuit board (50) having a front face turned toward the collecting assembly and a rear face on the opposite side,
- the primary radiating elements (ERP₁-ERP₄) are produced in a metallization layer of the front face of this board,
- the transmitting or receiving module is fastened to the rear face of this printed circuit board, and
- the primary radiating elements are electrically connected to the respective output or input ports by way of electrical vias (64) that pass through the thickness of this printed circuit board or the primary radiating elements are electrically connected to the respective output or input ports by way of respective electromagnetic couplings through the thickness of this printed circuit board.
